(19) **Europäisches Patentamt / European Patent Office / Office européen des brevets**

(11) **EP 4 266 784 A1**

(12) # EUROPEAN PATENT APPLICATION
published in accordance with Art. 153(4) EPC

(43) Date of publication:
**25.10.2023  Bulletin 2023/43**

(21) Application number: **21918313.4**

(22) Date of filing: **13.01.2021**

(51) International Patent Classification (IPC):
**H04W 72/04** [(2023.01)]

(52) Cooperative Patent Classification (CPC):
**H04W 72/04**

(86) International application number:
**PCT/CN2021/071596**

(87) International publication number:
**WO 2022/151098 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **LI, Ruijie**
  **Shenzhen, Guangdong 518129 (CN)**
- **GUAN, Lei**
  **Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **COMMUNICATION METHOD, COMMUNICATION DEVICE, AND COMMUNICATION SYSTEM**

(57)    This application discloses a communication method, a communication device, and a communication system, and relates to the field of communication technologies, to resolve a problem that a network device cannot perform adaptive adjustment on a downlink communication link in a highly-reliable and low latency communication technology. In a solution provided in this application, after receiving downlink data from a network device, a terminal device may determine information about whether M (M is a positive integer) pieces of downlink data (that is, a first information set) are successfully parsed, and further feed back, to the network device, information obtained by the terminal device by parsing N (N is a positive integer, and N≤M) pieces of downlink data (that is, second information), so that the network device can perform adaptive adjustment on a downlink based on the second information, thereby ensuring reliability of next downlink transmission.

FIG. 5

EP 4 266 784 A1

## Description

## TECHNICAL FIELD

Embodiments of this application relate to the field of communication technologies, and in particular, to a communication method, a communication device, and a communication system.

## BACKGROUND

With development and application scenario diversification of wireless communication technologies, more data transmission scenarios have transmission requirements such as high reliability and low latency. For example, in a 5th-generation (5th-Generation) mobile communication system, ultra-reliable and low latency communication (ultra-reliable and low latency communication, URLLC) is a typical highly-reliable and low latency communication technology. How to improve reliability of the highly-reliable and low latency communication technology (such as URLLC) is a problem to be resolved in the art.

Usually, communication reliability and communication efficiency can be improved by using an outer loop link adaptation (outer loop link adaptation, OLLA) technology. A principle of the OLLA technology is that a network device adjusts, by using an ACK/NACK fed back by a terminal device, a downlink (for example, a signal-to-noise ratio (signal-to-noise ratio, SNR)) for scheduling data transmission. In this way, spectral efficiency can be improved while data transmission reliability is improved. When the terminal device successfully parses downlink data, the terminal device feeds back an ACK to the network device. When the terminal device fails to parse downlink data, the terminal device feeds back a NACK to the network device.

However, because URLLC is characterized by high reliability, a probability that the terminal device fails to parse the downlink data is very low, for example, $10^{-6}$. In this case, in an execution process of the OLLA technology, the terminal device basically does not feed back a NACK, or there is a very low probability of feeding back a NACK. In this case, the OLLA technology does not practically function, and adaptive adjustment on the downlink for scheduling data transmission cannot be properly performed by using the ACK/NACK.

## SUMMARY

This application provides a communication method, a communication device, and a communication system, to resolve a problem that a network device cannot perform adaptive adjustment on a downlink communication link in a highly-reliable and low latency communication technology.

To achieve the foregoing objective, the following technical solutions are used in embodiments of this application.

According to a first aspect, a communication method is provided. The method includes: A terminal device determines a first information set, where the first information set includes M pieces of first information, M is a positive integer, at least one of the M pieces of first information corresponds to at least one piece of downlink data, and the first information indicates whether downlink data corresponding to the first information is successfully parsed; and the terminal device sends second information to a network device, where the second information is obtained by the terminal device based on downlink data corresponding to N pieces of first information in the first information set, N is a positive integer, and N≤M.

According to the technical solution provided in the first aspect, after receiving the downlink data from the network device, the terminal device may determine information about whether M pieces of downlink data (that is, the first information set) are successfully parsed, and further feed back, to the network device, the second information obtained by the terminal device by parsing N pieces of downlink data, so that the network device can perform adaptive adjustment on a downlink based on the second information, thereby ensuring reliability of next downlink transmission.

In a possible implementation, the second information includes one or more of the following: a cause for failure in parsing downlink data, a communication link compensation value, a block error rate, and a result of parsing the downlink data by the terminal device and reliability of the result. In this application, the terminal device may feed back, to the network device, results obtained by the terminal device by parsing the downlink data, such as a cause for failure in parsing downlink data, a communication link compensation value, a block error rate, and a result of parsing the downlink data by the terminal device and reliability of the result, so that the network device can perform adaptive adjustment on a downlink based on the foregoing results, thereby ensuring reliability of next downlink transmission.

In a possible implementation, M≥2, and N≥2. In this application, the terminal device may feed back, to the network device, at least two pieces of second information corresponding to the plurality of pieces of first information, so that the network device can perform adaptive adjustment on a downlink based on the at least two pieces of second information.

In a possible implementation, M≥2, and N=1. The second information is obtained by the terminal device based on downlink data corresponding to a $K^{th}$ piece of first information in the first information set, where K is a positive integer, and K≤M. In this application, the terminal device may feed back, to the network device, second information corresponding to one piece of first information, so that the network device can perform adaptive adjustment on a downlink based on one piece of second information while uplink transmission overheads are reduced.

In a possible implementation, K is determined by the terminal device.

In a possible implementation, the $K^{th}$ piece of first information is first information corresponding to downlink data that complies with a preset scheduling rule, has a preset priority, or meets a preset transmission condition. In this application, the terminal device can flexibly determine first information in the first information set based on a preset scheduling rule, a preset priority rule, or a preset transmission condition, to determine second information corresponding to the first information.

In a possible implementation, the $K^{th}$ piece of first information is determined by the terminal device based on time domain resource information. In this application, the terminal device can flexibly determine first information in the first information set based on time domain resource information, to determine second information corresponding to the first information.

In a possible implementation, the $K^{th}$ piece of first information is determined by the terminal device based on any one of the following of information: a predefined rule, network indication information, upper layer signaling configuration information, a communication protocol, and a preconfigured downlink scheduling period. In this application, the terminal device can flexibly determine first information in the first information set based on one or more of the following pieces of information: a predefined rule, network indication information, upper layer signaling configuration information, a communication protocol, a preconfigured downlink scheduling period, and the like, to determine second information corresponding to the first information.

In a possible implementation, the $K^{th}$ piece of first information is a last piece of first information in the first information set. In this application, the terminal device may report second information corresponding to the last piece of first information in the first information set.

In a possible implementation, the $K^{th}$ piece of first information is a first piece of first information in the first information set. In this application, the terminal device may report second information corresponding to the first piece of first information in the first information set.

In a possible implementation, the N pieces of first information are determined by the terminal device based on downlink control information (downlink control information, DCI) indication information. In this application, the terminal device can flexibly determine first information in the first information set based on DCI indication information, to determine second information corresponding to the first information.

In a possible implementation, DCI indication information corresponding to the N pieces of first information indicates to report second information corresponding to the N pieces of first information. In this application, if all pieces of DCI corresponding to a plurality of pieces of downlink data indicate the terminal device to feed back second information, the terminal device may feed back second information corresponding to the plurality of pieces of downlink data.

In a possible implementation, that the terminal device sends second information to a network device includes: The terminal device sends, to the network device, second information corresponding to an $x^{th}$ piece of first information in the first information set, where in DCI indication information corresponding to the M pieces of first information, y pieces of DCI indication information indicate to report second information corresponding to corresponding first information, the $x^{th}$ piece of first information is one of y pieces of first information, y is a positive integer, and y≤M. In this application, if all pieces of DCI corresponding to a plurality of pieces of downlink data indicate the terminal device to feed back second information, the terminal device may feed back second information corresponding to one piece of downlink data in the plurality of pieces of downlink data. In this case, uplink feedback overheads are reduced.

In a possible implementation, that the terminal device sends second information to a network device includes: The terminal device sends the second information to the network device based on DCI indication information corresponding to the $x^{th}$ piece of first information in the first information set, where the DCI indication information corresponding to the $x^{th}$ piece of first information indicates to report second information corresponding to the $x^{th}$ piece of first information, and x ∈ (1, M). In this application, the terminal device may send second information to the network device based on details of a specified DCI indication information (for example, whether to report the second information or not).

In a possible implementation, x is determined by the terminal device based on one or more of the following: a predefined rule, a protocol rule, or network indication information. In this application, when there are a plurality of pieces of candidate first information, the terminal device may determine one piece of first information based on a predefined rule, a protocol rule, or network indication information, and send, to the network device, second information corresponding to the one piece of first information, so that the network device can perform adaptive adjustment on a downlink based on one piece of second information while uplink transmission overheads are reduced.

In a possible implementation, the method further includes: The terminal device sends third information to the network device, where the third information indicates the N pieces of first information. By using this method, it can be ensured that the terminal device and the network device have a same understanding of downlink data corresponding to the first information set and the second information, thereby avoiding impact on downlink adjustment caused by an incorrect understanding.

In a possible implementation, the method further includes: The terminal device sends the first information set to the network device, where the terminal device sends the first information set and the second information that are jointly coded to the network device. In this application, the terminal device supports sending the first information set and the second information that are jointly coded to the network device, so that the network device performs adaptive adjustment on a downlink based on the first information set and/or the second information while complexity of implementing, by the terminal device, the communication method provided in this embodiment of this application can be reduced.

In a possible implementation, the method further includes: The terminal device sends the first information set to the network device, where the terminal device sends the first information set and the second information that are separately coded to the network device. In this application, the terminal device supports sending the first information set and the second information that are separately coded to the network device, so that the network device performs adaptive adjustment on a downlink based on the first information set and/or the second information while the first information set and the second information do not affect each other.

According to a second aspect, a communication method is provided. The method includes: A network device sends downlink data to a terminal device; and the network device receives a first information set and second information from the terminal device, where the first information set includes M pieces of first information, M is a positive integer, at least one of the M pieces of first information corresponds to at least one piece of downlink data, the first information indicates whether downlink data corresponding to the first information is successfully parsed, and the second information is obtained by the terminal device based on downlink data corresponding to N pieces of first information in the first information set, where N is a positive integer, and N≤M.

According to the technical solution provided in the second aspect, the network device may receive, from the terminal device, information about whether M pieces of downlink data (that is, the first information set) are successfully parsed and information obtained by parsing N pieces of downlink data (that is, the second information) that are fed back by the terminal device after the terminal device receives the downlink data from the network device, so as to completely learn of a specific situation of downlink transmission.

In a possible implementation, the method further includes: The network device adjusts a communication link based on the first information set and/or the second information. Further, the network device may perform adaptive adjustment on a downlink based on the information about whether the terminal device successfully parses the M pieces of downlink data (that is, the first information set) and/or information obtained by parsing the N pieces of downlink data (that is, the second information) that are/is received from the terminal device, to ensure reliability of next downlink transmission.

In a possible implementation, the second information includes one or more of the following: a cause for failure in parsing downlink data, a communication link compensation value, a block error rate, and a result of parsing the downlink data by the terminal device and reliability of the parsing result. In this application, the terminal device may feed back, to the network device, results obtained by the terminal device by parsing the downlink data, such as a cause for failure in parsing downlink data, a communication link compensation value, a block error rate, and a result of parsing the downlink data by the terminal device and reliability of the result, so that the network device can perform adaptive adjustment on a downlink based on the foregoing results, thereby ensuring reliability of next downlink transmission.

In a possible implementation, M≥2, and N≥2. In this application, the terminal device may feed back, to the network device, a plurality of pieces of first information and at least two pieces of second information, so that the network device can perform adaptive adjustment on a downlink based on the plurality of pieces of first information and/or the plurality of pieces of second information.

In a possible implementation, M≥2, and N=1. The second information is obtained by the terminal device based on downlink data corresponding to a K$^{th}$ piece of first information in the first information set, where K is a positive integer, and K≤M. In this application, the terminal device may feed back, to the network device, a plurality of pieces of first information and second information corresponding to one piece of first information, so that the network device can perform adaptive adjustment on a downlink based on the plurality of pieces of first information and/or the second information corresponding to the one piece of first information. Because the second information corresponding to only one piece of downlink data is fed back, feedback overheads are reduced.

In a possible implementation, before that the network device receives a first information set and second information from the terminal device, the method further includes: The network device sends DCI indication information to the terminal device, where the DCI indication information is used by the terminal device to determine the second information. In this application, the network device may indicate the terminal device to determine one or more pieces of first information from at least one piece of candidate first information based on DCI indication information, to feed back second information corresponding to the determined one or more pieces of first information.

In a possible implementation, the first information set and the second information are jointly coded. In this application, the terminal device supports sending the first information set and the second information that are jointly coded to the network device, so that the network device performs adaptive adjustment on a downlink based on the first information set and/or the second information while complexity of implementing, by the terminal device, the communication method provided in this embodiment of this application can be reduced.

In a possible implementation, the first information set and the second information are separately coded. In this application, the terminal device supports sending the first information set and the second information that are separately coded to the network device, so that the network device performs adaptive adjustment on a downlink based on the first information set and/or the second information while the first information set and the second information do not affect each other.

According to a third aspect, a terminal device is provided. The terminal device includes: a processing unit, configured to determine a first information set, where the first information set includes M pieces of first information, M is a positive integer, at least one of the M pieces of first information corresponds to at least one piece of downlink data, and the first information indicates whether downlink data corresponding to the first information is successfully parsed; and a transceiver unit, configured to send second information sent to a network device, where the second information is obtained by the terminal device based on downlink data corresponding to N pieces of first information in the first information set, N is a positive integer, and N≤M.

According to the technical solution provided in the third aspect, after receiving the downlink data from the network device, the terminal device may determine information about whether M pieces of downlink data (that is, the first information set) are successfully parsed, and further feed back, to the network device, a result of parsing N pieces of downlink data (that is, the second information) by the terminal device, so that the network device can perform adaptive adjustment on a downlink based on the second information, thereby ensuring reliability of next downlink transmission.

In a possible implementation, the second information includes one or more of the following: a cause for failure in parsing downlink data, a communication link compensation value, a block error rate, and a result of parsing the downlink data by the terminal device and reliability of the result. In this application, the terminal device may feed back, to the network device, results obtained by the terminal device by parsing the downlink data, such as a cause for failure in parsing downlink data, a communication link compensation value, a block error rate, and a result of parsing the downlink data by the terminal device and reliability of the result, so that the network device can perform adaptive adjustment on a downlink based on the foregoing results, thereby ensuring reliability of next downlink transmission.

In a possible implementation, M≥2, and N≥2. In this application, the terminal device may feed back, to the network device, at least two pieces of second information corresponding to the plurality of pieces of first information, so that the network device can perform adaptive adjustment on a downlink based on the at least two pieces of second information.

In a possible implementation, M≥2, and N=1. The second information is obtained by the terminal device based on downlink data corresponding to a $K^{th}$ piece of first information in the first information set, where K is a positive integer, and K≤M. In this application, the terminal device may feed back, to the network device, second information corresponding to one piece of first information, so that the network device can perform adaptive adjustment on a downlink based on one piece of second information while uplink transmission overheads are reduced.

In a possible implementation, K is determined by the processing unit of the terminal device.

In a possible implementation, the $K^{th}$ piece of first information is first information corresponding to downlink data that complies with a preset scheduling rule, has a preset priority, or meets a preset transmission condition. In this application, the terminal device can flexibly determine first information in the first information set based on a preset scheduling rule, a preset priority rule, or a preset transmission condition, to determine second information corresponding to the first information.

In a possible implementation, the $K^{th}$ piece of first information is determined by the terminal device based on time domain resource information. In this application, the terminal device can flexibly determine first information in the first information set based on time domain resource information, to determine second information corresponding to the first information.

In a possible implementation, the $K^{th}$ piece of first information is determined by the terminal device based on any one of the following information: a predefined rule, network indication information, upper layer signaling configuration information, a communication protocol, and a preconfigured downlink scheduling period. In this application, the terminal device can flexibly determine first information in the first information set based on one or more of the following pieces of information: a predefined rule, network indication information, upper layer signaling configuration information, a communication protocol, a preconfigured downlink scheduling period, and the like, to determine second information corresponding to the first information.

In a possible implementation, the $K^{th}$ piece of first information is a last piece of first information in the first information set. In this application, the terminal device may report second information corresponding to the last piece of first information in the first information set.

In a possible implementation, the $K^{th}$ piece of first information is a first piece of first information in the first information set. In this application, the terminal device may report second information corresponding to the first piece of first information in the first information set.

In a possible implementation, the N pieces of first information are determined by the terminal device based on DCI indication information. In this application, the terminal device can flexibly determine first information in the first information set based on DCI indication information, to determine second information corresponding to the first information.

In a possible implementation, DCI indication information corresponding to the N pieces of first information indicates to report second information corresponding to the N pieces of first information. In this application, if all pieces of DCI corresponding to a plurality of pieces of downlink data indicate the terminal device to feed back second information, the terminal device feeds back second information corresponding to the plurality of pieces of downlink data.

In a possible implementation, the transceiver unit is specifically configured to send, to the network device, second information corresponding to an $x^{th}$ piece of first information in the first information set, where in DCI indication information corresponding to the M pieces of first information, y pieces of DCI indication information indicate to report second information corresponding to corresponding first information, the $x^{th}$ piece of first information is one of y pieces of first information, y is a positive integer, and y≤M. In this application, if all pieces of DCI corresponding to a plurality of pieces of downlink data indicate the terminal device to feed back second information, the terminal device may feed back second information corresponding to one piece of downlink data in the plurality of pieces of downlink data. In this case, overheads of uplink feedback can be saved.

In a possible implementation, the transceiver unit is specifically configured to send the second information to the network device based on DCI indication information corresponding to an $x^{th}$ piece of first information in the first information set, where the DCI indication information corresponding to the $x^{th}$ piece of first information indicates to report second information corresponding to the $x^{th}$ piece of first information, and $x \in (1, M)$. In this application, the terminal device may send second information to the network device based on details of a specified DCI indication information (for example, whether to report the second information or not).

In a possible implementation, x is determined by the terminal device based on one or more of the following: a predefined rule, a protocol rule, or network indication information. In this application, when there are a plurality of pieces of candidate first information, the terminal device may determine one piece of first information based on a predefined rule, a protocol rule, or network indication information, and send, to the network device, second information corresponding to the one piece of first information, so that the network device can perform adaptive adjustment on a downlink based on one piece of second information while uplink transmission overheads are reduced.

In a possible implementation, the transceiver unit is further configured to send third information to the network device, where the third information indicates the N pieces of first information. By using this method, it can be ensured that the terminal device and the network device have a same understanding of downlink data corresponding to the first information set and the second information, thereby avoiding impact on downlink adjustment caused by an incorrect understanding.

In a possible implementation, the transceiver unit is further configured to send the first information set to the network device, where the transceiver unit sends the first information set and the second information that are jointly coded to the network device. In this application, the terminal device supports sending the first information set and the second information that are jointly coded to the network device, so that the network device performs adaptive adjustment on a downlink based on the first information set and/or the second information while complexity of implementing, by the terminal device, the communication method provided in this embodiment of this application can be reduced.

In a possible implementation, the transceiver unit is further configured to send the first information set to the network device, where the transceiver unit sends the first information set and the second information that are jointly coded to the network device. In this application, the terminal device supports sending the first information set and the second information that are separately coded to the network device, so that the network device performs adaptive adjustment on a downlink based on the first information set and/or the second information while the first information set and the second information do not affect each other.

According to a fourth aspect, a network device is provided. The network device includes: a transceiver unit, configured to send downlink data to a terminal device; and receive a first information set and second information from the terminal device, where the first information set includes M pieces of first information, M is a positive integer, at least one of the M pieces of first information corresponds to at least one piece of downlink data, the first information indicates whether downlink data corresponding to the first information is successfully parsed, and the second information is obtained by the terminal device based on downlink data corresponding to N pieces of first information in the first information set, where N is a positive integer, and N≤M.

According to the technical solution provided in the fourth aspect, the network device may receive, from the terminal device, information about whether M pieces of downlink data (that is, the first information set) are successfully parsed and information obtained by parsing N pieces of downlink data (that is, the second information) that are fed back by the terminal device after the terminal device receives the downlink data from the network device, so as to completely learn of a specific situation of downlink transmission.

In a possible implementation, the network device further includes: a processing unit, configured to adjust a communication link based on the first information set and/or the second information. Further, the network device may perform adaptive adjustment on a downlink based on the information about whether the terminal device successfully parses the M pieces of downlink data (that is, the first information set) and/or information obtained by parsing the N pieces of downlink data (that is, the second information) that are/is received from the terminal device, to ensure reliability of next downlink transmission.

In a possible implementation, the second information includes one or more of the following: a cause for failure in parsing downlink data, a communication link compensation value, a block error rate, and a result of parsing the downlink data by the terminal device and reliability of the parsing result. In this application, the terminal device may feed back, to the network device, results obtained by the terminal device by parsing the downlink data, such as a cause for failure in parsing downlink data, a communication link compensation value, a block error rate, and a result of parsing the downlink data by the terminal device and reliability of the result, so that the network device can perform adaptive adjustment on a downlink based on the foregoing results, thereby ensuring reliability of next downlink transmission.

In a possible implementation, $M \geq 2$, and $N \geq 2$. In this application, the terminal device may feed back, to the network device, a plurality of pieces of first information and at least two pieces of second information, so that the network device can perform adaptive adjustment on a downlink based on the plurality of pieces of first information and/or the plurality of pieces of second information.

In a possible implementation, $M \geq 2$, and $N = 1$. The second information is obtained by the terminal device based on downlink data corresponding to a $K^{th}$ piece of first information in the first information set, where K is a positive integer, and $K \leq M$. In this application, the terminal device may feed back, to the network device, a plurality of pieces of first information and second information corresponding to one piece of first information, so that the network device can perform adaptive adjustment on a downlink based on the plurality of pieces of first information and/or one piece of first information. Because the second information corresponding to only one piece of downlink data is fed back, feedback overheads are reduced.

In a possible implementation, the transceiver unit is further configured to send DCI indication information to the terminal device before receiving the first information set and the second information from the terminal device, where the DCI indication information is used by the terminal device to determine the second information. In this application, the network device may indicate the terminal device to determine one or more pieces of first information from at least one piece of candidate first information based on DCI indication information, to feed back second information corresponding to the determined one or more pieces of first information.

In a possible implementation, the transceiver unit is specifically configured to receive the first information set and the second information that are jointly coded from the terminal device. In this application, the terminal device supports sending the first information set and the second information that are jointly coded to the network device, so that the network device performs adaptive adjustment on a downlink based on the first information set and/or the second information while complexity of implementing, by the terminal device, the communication method provided in this embodiment of this application can be reduced.

In a possible implementation, the transceiver unit is specifically configured to receive the first information set and the second information that are independently coded from the terminal device. In this application, the terminal device supports sending the first information set and the second information that are separately coded to the network device, so that the network device performs adaptive adjustment on a downlink based on the first information set and/or the second information while the first information set and the second information do not affect each other.

According to a fifth aspect, a terminal device is provided. The terminal device includes: a memory, configured to store a computer program; a transceiver, configured to receive or transmit a radio signal; and a processor, configured to execute the computer program, so that the terminal device determines a first information set and indicates the transceiver to send second information to the network device, where the first information set includes M pieces of first information, M is a positive integer, at least one of the M pieces of first information corresponds to at least one piece of downlink data, the first information indicates whether downlink data corresponding to the first information is successfully parsed, the second information is obtained by the terminal device based on downlink data corresponding to N pieces of first information in the first information set, N is a positive integer, and $N \leq M$.

According to the technical solution provided in the fifth aspect, after receiving the downlink data from the network device, the terminal device may determine information about whether M pieces of downlink data are successfully parsed, and further feed back, to the network device, the second information obtained by the terminal device by parsing N pieces of downlink data, so that the network device can perform adaptive adjustment on a downlink based on the second information, thereby ensuring reliability of next downlink transmission.

In a possible implementation, the second information includes one or more of the following: a cause for failure in parsing downlink data, a communication link compensation value, a block error rate, and a result of parsing the downlink data by the terminal device and reliability of the result. In this application, the terminal device may feed back, to the network device, results obtained by the terminal device by parsing the downlink data, such as a cause for failure in parsing downlink data, a communication link compensation value, a block error rate, and a result of parsing the downlink data by the terminal device and reliability of the result, so that the network device can perform adaptive adjustment on a downlink based on the foregoing results, thereby ensuring reliability of next downlink transmission.

In a possible implementation, M≥2, and N≥2. In this application, the terminal device may feed back, to the network device, at least two pieces of second information corresponding to the plurality of pieces of first information, so that the network device can perform adaptive adjustment on a downlink based on the at least two pieces of second information.

In a possible implementation, M≥2, and N=1. The second information is obtained by the terminal device based on downlink data corresponding to a $K^{th}$ piece of first information in the first information set, where K is a positive integer, and K≤M. In this application, the terminal device may feed back, to the network device, second information corresponding to one piece of first information, so that the network device can perform adaptive adjustment on a downlink based on one piece of second information while uplink transmission overheads are reduced.

In a possible implementation, K is determined by the processor of the terminal device.

In a possible implementation, the $K^{th}$ piece of first information is first information corresponding to downlink data that complies with a preset scheduling rule, has a preset priority, or meets a preset transmission condition. In this application, the terminal device can flexibly determine first information in the first information set based on a preset scheduling rule, a preset priority rule, or a preset transmission condition, to determine second information corresponding to the first information.

In a possible implementation, the $K^{th}$ piece of first information is determined by the terminal device based on time domain resource information. In this application, the terminal device can flexibly determine first information in the first information set based on time domain resource information, to determine second information corresponding to the first information.

In a possible implementation, the $K^{th}$ piece of first information is determined by the terminal device based on any one of the following information: a predefined rule, network indication information, upper layer signaling configuration information, a communication protocol, and a preconfigured downlink scheduling period. In this application, the terminal device can flexibly determine first information in the first information set based on one or more of the following pieces of information: a predefined rule, network indication information, upper layer signaling configuration information, a communication protocol, a preconfigured downlink scheduling period, and the like, to determine second information corresponding to the first information.

In a possible implementation, the $K^{th}$ piece of first information is a last piece of first information in the first information set. In this application, the terminal device may report second information corresponding to the last piece of first information in the first information set.

In a possible implementation, the $K^{th}$ piece of first information is a first piece of first information in the first information set. In this application, the terminal device may report second information corresponding to the first piece of first information in the first information set.

In a possible implementation, the N pieces of first information are determined by the terminal device based on DCI indication information. In this application, the terminal device can flexibly determine first information in the first information set based on DCI indication information, to determine second information corresponding to the first information.

In a possible implementation, DCI indication information corresponding to the N pieces of first information indicates to report second information corresponding to the N pieces of first information. In this application, if all pieces of DCI corresponding to a plurality of pieces of downlink data indicate the terminal device to feed back second information, the terminal device may feed back second information corresponding to the plurality of pieces of downlink data.

In a possible implementation, the transceiver is specifically configured to send, to the network device, second information corresponding to an $x^{th}$ piece of first information in the first information set, where in DCI indication information corresponding to the M pieces of first information, y pieces of DCI indication information indicate to report second information corresponding to corresponding first information, the $x^{th}$ piece of first information is one of y pieces of first information, y is a positive integer, and y≤M. In this application, if all pieces of DCI corresponding to a plurality of pieces of downlink data indicate the terminal device to feed back second information, the terminal device may feed back second information corresponding to one piece of downlink data in the plurality of pieces of downlink data. In this case, overheads of uplink feedback can be saved.

In a possible implementation, the transceiver is specifically configured to send the second information to the network device based on DCI indication information corresponding to the $x^{th}$ piece of first information in the first information set, where the DCI indication information corresponding to the $x^{th}$ piece of first information indicates to report second information corresponding to the $x^{th}$ piece of first information, and x ∈ (1, M). In this application, the terminal device may send second information to the network device based on details of a specified DCI indication information (for example, whether to report the second information or not).

In a possible implementation, x is determined by the terminal device based on one or more of the following: a predefined rule, a protocol rule, or network indication information. In this application, when there are a plurality of pieces of candidate first information, the terminal device may determine one piece of first information based on a predefined rule, a protocol rule, or network indication information, and send, to the network device, second information corresponding to the one piece of first information, so that the network device can perform adaptive adjustment on a downlink based on one piece of second information while uplink transmission overheads are reduced.

In a possible implementation, the transceiver is further configured to send third information to the network device, where the third information indicates the N pieces of first information. By using this method, it can be ensured that the terminal device and the network device have a same understanding of downlink data corresponding to the first information set and the second information, thereby avoiding impact on downlink adjustment caused by an incorrect understanding.

In a possible implementation, the transceiver is further configured to send the first information set to the network device, where the transceiver unit sends the first information set and the second information that are jointly coded to the network device. In this application, the terminal device supports sending the first information set and the second information that are jointly coded to the network device, so that the network device performs adaptive adjustment on a downlink based on the first information set and/or the second information while complexity of implementing, by the terminal device, the communication method provided in this embodiment of this application can be reduced.

In a possible implementation, the transceiver is further configured to send the first information set to the network device, where the transceiver unit sends the first information set and the second information that are jointly coded to the network device. In this application, the terminal device supports sending the first information set and the second information that are separately coded to the network device, so that the network device performs adaptive adjustment on a downlink based on the first information set and/or the second information while the first information set and the second information do not affect each other.

According to a sixth aspect, a network device is provided. The network device includes: a memory, configured to store a computer program; a transceiver, configured to receive or transmit a radio signal; and a processor, configured to execute the computer program, so that a network device sends downlink data to a terminal device; and receive a first information set and second information from the terminal device, where the first information set includes M pieces of first information, M is a positive integer, at least one of the M pieces of first information corresponds to at least one piece of downlink data, the first information indicates whether downlink data corresponding to the first information is successfully parsed, the second information is obtained by the terminal device based on downlink data corresponding to N pieces of first information in the first information set, N is a positive integer, and N≤M.

According to the technical solution provided in the sixth aspect, the network device may receive, from the terminal device, information about whether M pieces of downlink data (that is, the first information set) are successfully parsed and information obtained by parsing N pieces of downlink data (that is, the second information) that are fed back by the terminal device after the terminal device receives the downlink data from the network device, so as to completely learn of a specific situation of downlink transmission.

In a possible implementation, the processor is further configured to execute the computer program, so that the network device adjusts a communication link based on the first information set and/or the second information. Further, the network device may perform adaptive adjustment on a downlink based on the information about whether the terminal device successfully parses the M pieces of downlink data (that is, the first information set) and/or information obtained by parsing the N pieces of downlink data (that is, the second information) that are/is received from the terminal device, to ensure reliability of next downlink transmission.

In a possible implementation, the second information includes one or more of the following: a cause for failure in parsing downlink data, a communication link compensation value, a block error rate, and a result of parsing the downlink data by the terminal device and reliability of the parsing result. In this application, the terminal device may feed back, to the network device, results obtained by the terminal device by parsing the downlink data, such as a cause for failure in parsing downlink data, a communication link compensation value, a block error rate, and a result of parsing the downlink data by the terminal device and reliability of the result, so that the network device can perform adaptive adjustment on a downlink based on the foregoing results, thereby ensuring reliability of next downlink transmission.

In a possible implementation, M≥2, and N≥2. In this application, the terminal device may feed back, to the network device, a plurality of pieces of first information and at least two pieces of second information, so that the network device can perform adaptive adjustment on a downlink based on the plurality of pieces of first information and/or the plurality of pieces of second information.

In a possible implementation, M≥2, and N=1. The second information is obtained by the terminal device based on downlink data corresponding to a $K^{th}$ piece of first information in the first information set, where K is a positive integer, and K≤M. In this application, the terminal device may feed back, to the network device, a plurality of pieces of first information and second information corresponding to one piece of first information, so that the network device can perform adaptive adjustment on a downlink based on the plurality of pieces of first information and/or one piece of first information. Because the second information corresponding to only one piece of downlink data is fed back, feedback overheads are reduced.

In a possible implementation, the transceiver is further configured to send DCI indication information to the terminal device before receiving the first information set and the second information from the terminal device, where the DCI indication information is used by the terminal device to determine the second information. In this application, the network device may indicate the terminal device to determine one or more pieces of first information from at least one piece of candidate first information based on DCI indication information, to feed back second information corresponding to the determined one or more pieces of first information.

In a possible implementation, the transceiver is specifically configured to receive the first information set and the second information that are jointly coded from the terminal device. In this application, the terminal device supports sending the first information set and the second information that are jointly coded to the network device, so that the network device performs adaptive adjustment on a downlink based on the first information set and/or the second information while complexity of implementing, by the terminal device, the communication method provided in this embodiment of this application can be reduced.

In a possible implementation, the transceiver is specifically configured to receive the first information set and the second information that are independently coded from the terminal device. In this application, the terminal device supports sending the first information set and the second information that are separately coded to the network device, so that the network device performs adaptive adjustment on a downlink based on the first information set and/or the second information while the first information set and the second information do not affect each other.

According to a seventh aspect, a communication system is provided. The communication system includes: the terminal device according to any possible implementation of the third aspect or the fifth aspect, and the network device according to any possible implementation of the fourth aspect or the sixth aspect.

According to an eighth aspect, a computer-readable storage medium is provided, where the computer-readable storage medium stores computer program code. When the computer program code is executed by a processor, the method according to any possible implementation of the first aspect or the second aspect is implemented.

According to the ninth aspect, a chip system is provided. The chip system includes a processor and a memory, where the memory stores computer program code, and when the computer program code is executed by the processor, the method according to any possible implementation of the first aspect or the second aspect is implemented. The chip system may include a chip, or may include a chip and another discrete component.

According to a tenth aspect, a computer program product is provided. When the computer program product runs on a computer, the method according to any possible implementation of the first aspect or the second aspect is implemented.

## BRIEF DESCRIPTION OF DRAWINGS

FIG. 1 is a schematic diagram of a network architecture for a communication method according to an embodiment of this application;

FIG. 2 is a schematic diagram of a hardware structure of a network device according to an embodiment of this application;

FIG. 3 is a schematic diagram of a hardware structure of a terminal device according to an embodiment of this application;

FIG. 4 is a schematic diagram of a process of adjusting a signal-to-noise ratio (signal-to-noise ratio, SNR) based on channel quality information (channel quality information, CQI) according to an embodiment of this application;

FIG. 5 is a flowchart of a communication method according to an embodiment of this application;

FIG. 6A is an example diagram of time domain resource indication information according to an embodiment of this application;

FIG. 6B is an example diagram of a downlink data scheduling slot according to an embodiment of this application;

FIG. 7A is an example diagram of a resource for feeding back a semi-persistent codebook according to an embodiment of this application;

FIG. 7B is an example diagram of a semi-persistent codebook according to an embodiment of this application;

FIG. 8 is an example diagram of a codeblock group (codeblock group, CBG) feedback manner according to an embodiment of this application;

FIG. 9 is a flowchart of another communication method according to an embodiment of this application; and

FIG. 10 is a block diagram of a structure of a terminal device or a network device according to an embodiment of this application.

**DESCRIPTION OF EMBODIMENTS**

The following describes technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more such features. In the descriptions of embodiments, unless otherwise specified, "a plurality of" means two or more than two.

In this application, upper layer signaling may be signaling sent by an upper protocol layer. The upper protocol layer is at least one protocol layer above a physical layer. For example, an upper protocol layer may include at least one of the following: a medium access control (medium access control, MAC) layer, a radio link control (radio link control, RLC) layer, a packet data convergence protocol (packet data convergence protocol, PDCP) layer, a radio resource control (radio resource control, RRC) layer, and a non-access stratum (non-access stratum, NAS) layer.

An embodiment of this application provides a communication method. The communication method may be applied to a communication system that includes a network device and a terminal device.

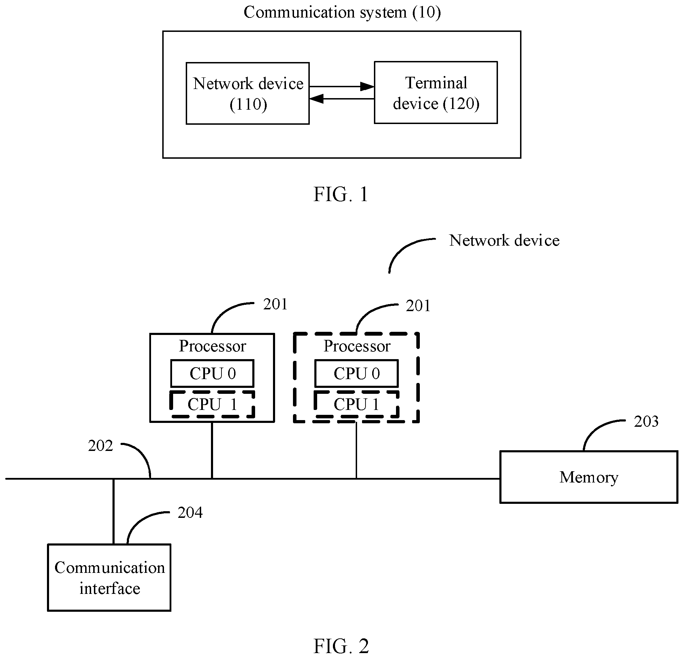

Refer to FIG. 1. FIG. 1 is a schematic diagram of a network architecture for a communication method according to an embodiment of this application. As shown in FIG. 1, an embodiment of this application provides a communication method that can be applied to a communication system 10 including a network device 110 and a terminal device 120. A communication connection is established between the network device 110 and the terminal device 120.

In this embodiment of this application, the network device may be a radio access network (radio access network, RAN) device. The RAN device may include a base station. For example, the base station may be a wireless transceiver, a transceiver functional unit, a basic service set (basic service set, BSS), an extended service set (extended service set, ESS), an access point (access point, AP), or a nodeB (NodeB, NB), an eNodeB (eNB), a gNodeB (gNB), a next-generation eNodeB (next-generation eNodeB, ng-eNB), a transmission/reception point (trasmission/reception point, TRP), or a distributed unit-control unit (distributed unit-control unit, DU-CU), etc. The DU-CU may be a device that is deployed in the radio access network and that can perform wireless communication with the terminal device. Alternatively, the network device may be a router or another wireless access device that may be configured as a base station, for example, an unmanned aerial vehicle or aircraft. Alternatively, the network device may be a wireless terminal (wireless terminal, WT), for example, an access point (access point, AP) or an access controller (access controller, AC). A specific type, a structure, a function, and the like of the network device are not limited in embodiments of this application.

Refer to FIG. 2. FIG. 2 is a schematic diagram of a hardware structure of a network device according to an embodiment of this application. As shown in FIG. 2, the network device may include a processor 201, a communication line 202, a memory 203, and at least one communication interface (where FIG. 2 is described merely by using an example in which the network device includes a communication interface 204).

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path through which information is transferred between the foregoing components.

The communication interface 204 is any apparatus such as a transceiver, and is configured to communicate with another device or a communication network such as the Ethernet, a radio access network (radio access network, RAN), or a wireless local area network (wireless local area network, WLAN).

The memory 203 may be a read-only memory (read-only memory, ROM) or another type of static storage device capable of storing static information and instructions, or a random access memory (random access memory, RAM) or another type of dynamic storage device capable of storing information and instructions. Alternatively, the memory 203 may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the communication line 202. The memory may alternatively be integrated with the processor.

The memory 203 is configured to store computer-executable instructions for performing the solutions in this application. The memory 203 can store instructions for implementing two modular functions: a sending instruction, a receiving instruction, and a processing instruction, and the processor 201 controls execution of the instructions. The processor 201 is configured to execute the computer-executable instructions stored in the memory 203, to implement the random access method provided in the following embodiments of this application. The memory 203 shown in FIG. 2 is merely a schematic diagram. The memory may further include another functional instruction. This is not limited in the present invention.

Optionally, the computer-executable instructions in this application may also be referred to as application code. This is not specifically limited in this application.

In a specific implementation, in an embodiment, the processor 201 may include one or more CPUs, for example, a CPU 0 and a CPU 1 in FIG. 2.

It should be noted that FIG. 2 is merely an example of the network device, and a specific structure of the network device is not limited. For example, the network device may further include another functional module.

The terminal device in this application may be a desktop device, a laptop device, a handheld device, a wearable device, a smart home device, a computing device, a vehicle-mounted device, or the like having a communication function, for example, a mobile phone, a netbook, a tablet computer, a smartwatch, an ultra-mobile personal computer (ultra-mobile personal computer, UMPC), a smart camera, a personal digital assistant (personal digital assistant, PDA), a portable multimedia player (portable multimedia player, PMP), an AR (augmented reality)/VR (virtual reality) device, a wireless device on a flight vehicle, a wireless device on a robot, a wireless device in industrial control, a wireless device in telemedicine, a wireless device in a smart grid, a wireless device in a smart city (smart city), and a wireless device in a smart home (smart home). Alternatively, the terminal device may be a wireless device using a narrowband (narrowband, NB) technology, or the like. A specific type, a structure, a function, and the like of the terminal device are not limited in this application.

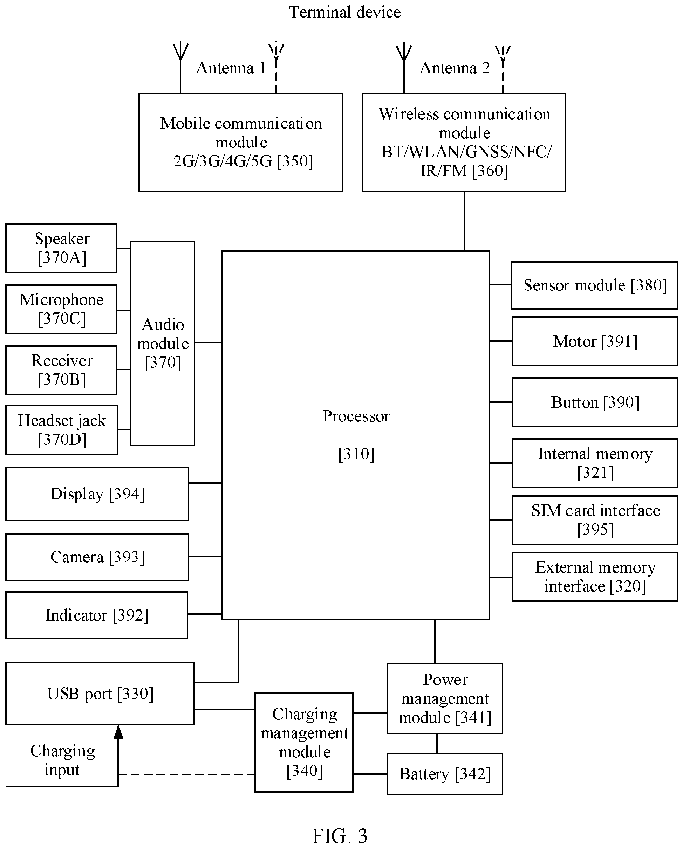

Refer to FIG. 3. A mobile phone is used as an example in FIG. 3. FIG. 3 is a schematic diagram of a hardware structure of a terminal device according to an embodiment of this application. As shown in FIG. 3, the terminal device may include a processor 310, a memory (including an external memory interface 320 and an internal memory 321), a universal serial bus (universal serial bus, USB) port 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like. The sensor module 380 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of the present invention does not constitute a specific limitation on the terminal device. In some other embodiments, the terminal device can include more or fewer components than those shown in the figure, or some components can be combined, or some components can be split, or a different component arrangement can be used. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device. The controller may complete instruction reading and generate an operation control signal based on instructions, to perform control of instructions.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces a waiting time of the processor 310, thereby improving system efficiency.

In some embodiments, the processor 310 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 310 may include one or more CPUs. For example, the processor 310 may be a Huawei Kirin 960 chip.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 340 is configured to receive a charging input from the charger. The charger may be a wireless charger or a wired charger. In some embodiments of wired charging, the charging management module 340 may receive a charging input of a wired charger through the USB port 330. In some embodiments of wireless charging, the charging management module 340 may receive a wireless charging input through a wireless charging coil of the terminal device. The charging management module 340 may further supply power to the terminal device by using the power management module 341 while charging the battery 342.

The power management module 341 is configured to connect the battery 342, the charging management module 340, and the processor 310. The power management module 341 receives an input of the battery 342 and/or the charging management module 340, to supply power to the processor 310, the internal memory 321, the display 394, the camera 393, the wireless communication module 360, and the like. The power management module 341 may be further configured to monitor parameters such as a battery capacity, a battery cycle count, and a battery health status (electric leakage or impedance). In some other embodiments, the power management module 341 may alternatively be disposed in the processor 310. In some other embodiments, the power management module 341 and the charging management module 340 may alternatively be disposed in a same device.

A wireless communication function of the terminal device may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the terminal device may be configured to cover one or more communication bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 350 may provide a solution that is applied to the electronic device and that is for wireless communication such as 2G, 3G, 4G, and 5G communication. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules of the mobile communication module 350 and at least some modules of the processor 310 may be disposed in a same device.

The modem processor may include a modulator and a demodulator. The modulator is configured to modulate a to-be-sent low-frequency baseband signal into a medium or high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 370A, the receiver 370B, or the like), or displays an image or a video by using the display 394. In some embodiments, the modem processor may be an independent component. In some other embodiments, the modem processor may be independent of the processor 310, and the modem processor and the mobile communication module 350 or another functional module may be disposed in a same device.

The wireless communication module 360 may provide a solution that is applied to the terminal device and that is for wireless communication such as a wireless local area network (wireless local area network, WLAN) (for example, a Wi-Fi network), Bluetooth BT, a global navigation satellite system (global navigation satellite system, GNSS), frequency modulation (frequency modulation, FM), near field communication (near field communication, NFC), or an infrared (infrared, IR) technology. The wireless communication module 360 may be one or more components that integrate at least one communication processor module. The wireless communication module 360 receives an electromagnetic wave through the antenna 2, performs processing such as frequency modulation and filtering on the electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, in the terminal device, the antenna 1 and the mobile communication module 350 are coupled, and the antenna 2 and the wireless communication module 360 are coupled, so that the terminal device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The terminal device implements a display function by using the GPU, the display 394, the application processor, and the like.

The display 394 is configured to display an image, a video, and the like. The display 394 includes a display panel. In some embodiments, the terminal device may include one or N displays 394, where N is a positive integer greater than 1.

The terminal device can implement a photographing function by using the ISP, the camera 393, the video codec, the GPU, the display 394, the application processor, and the like.

The external memory interface 320 may be configured to connect to an external storage card, for example, a micro SD card, to extend a storage capability of the terminal device. The external memory card communicates with the processor 310 through the external memory interface 320, to implement a data storage function. For example, files such as music and videos are stored in the external storage card.

The internal memory 321 may be configured to store computer-executable program code, and the executable program code includes instructions. The internal memory 321 may include a program storage area and a data storage area. The program storage area may store an operating system, an application required by at least one function (for example, a sound playing function or an image playing function), and the like. The data storage area may store data (such as audio data and an address book) created when the terminal device is used, and the like. In addition, the internal memory 321 may include a high-speed random access memory, and may further include a nonvolatile memory, for example, at least one magnetic disk storage device, a flash memory device, or a universal flash storage (universal flash storage, UFS). The processor 310 executes various functional applications and data processing of the terminal device by running instructions stored in the internal memory 321 and/or instructions stored in the memory disposed in the processor.

The terminal device can implement audio functions, for example, a music playing function and a recording function, by using the audio module 370, the speaker 370A, the receiver 370B, the microphone 370C, the application processor, and the like. For specific working principles and functions of the audio module 370, the speaker 370A, the receiver 370B, and the microphone 370C, refer to descriptions in the conventional technology.

The button 390 includes a power button, a volume button, and the like. The button 390 may be a mechanical button, or may be a touch button. The terminal device may receive a button input, and generate a button signal input related to a user setting and function control of the terminal device.

It should be noted that the hardware modules included in the terminal device shown in FIG. 3 are merely described as examples, and a specific structure of the terminal device is not limited. For example, the terminal device may further include another functional module.

In some embodiments of this application, a communication method provided in embodiments of this application may be applied to a process in which a terminal device feeds back, to a network device, information used for downlink adaptive adjustment.

For example, in a link adjustment technology, based on channel quality information (channel quality information, CQI) fed back by a terminal device, a network device may adjust a signal-to-noise ratio (signal-to-noise ratio, SNR) for scheduling data transmission.

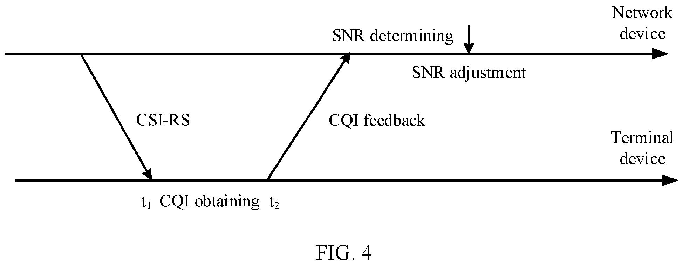

Refer to FIG. 4. FIG. 4 is a schematic diagram of a process of performing SNR adjustment based on CQI. As shown in FIG. 4, a network device first sends a channel state information-reference signal (channel state information-reference signal, CSI-RS) to a terminal device. After receiving the CSI-RS, the terminal device measures a channel based on the CSI-RS to obtain CQI, and then feeds back the CQI to the network device. The network device may perform SNR adjustment based on the CQI, to perform downlink data scheduling based on an adjusted SNR (for example, select a modulation and coding scheme for downlink data transmission, and allocate a resource for downlink data transmission).

However, as shown in FIG. 4, the terminal device receives the CSI-RS at a moment t1, measures the channel based on the CSI-RS to obtain the CQI, and feeds back the CQI to the network device at a moment t2. The network device determines the SNR based on the received CQI, and performs data scheduling at a moment t3. In other words, the network device uses the channel measured by the terminal device at the moment t1 to schedule data at the moment t3. A time difference between the moment t1 and the moment t3 usually leads to inaccurate channel measurement. For example, when the terminal device measures the channel at the moment t1, a channel condition is good, and an obtained SNR is 20 dB. However, at the moment t3, if the channel condition becomes poor, and the network device still performs data scheduling based on the channel state information fed back by the terminal device, there is a high probability that a data transmission error occurs.

To resolve the problem that occurs during SNR adjustment performed based on the CQI, in some embodiments of this application, the terminal device may feed back, to the network device, a result of parsing downlink data by the terminal device, so that the network device timely performs, based on an actual communication condition, adaptive adjustment on a downlink for scheduling data transmission.

For example, in another link adjustment technology, that is, an outer loop link adaptation (outer loop link adaptation, OLLA) technology, the network device may timely adjust an SNR for next scheduling data transmission based on information that is currently fed back by the terminal device and that is about whether downlink data is successfully parsed. The information about whether downlink data is successfully parsed may include an acknowledge (acknowledge, ACK) or a non-acknowledge (non-acknowledge, NACK), where the acknowledge ACK indicates that downlink data is successfully parsed, and the non-acknowledge NACK indicates that downlink data fails to be parsed. According to the foregoing method, scheduling performed by the network device on the terminal device can adapt to a downlink state in time, thereby improving data transmission reliability and spectral efficiency. When the terminal device successfully parses downlink data, the terminal device feeds back an ACK to the network device. When the terminal device fails to parse downlink data, the terminal device feeds back a NACK to the network device.

For example, the following formula 1 shows an example of an SNR adjustment policy that is based on the OLLA technology.

$$SNR(i)=SNR_{CQI}+\Delta offset(i) \quad \text{Formula 1}$$

In the formula, i represents an $i^{th}$ SNR adjustment, $SNR_{CQI}$ is an SNR determined by the network device based on channel quality information (channel quality information, CQI) fed back by the terminal device, $\Delta offset (i)$ is an OLLA adjustment amount, and SNR(i) obtained through calculation according to the foregoing formula 1 represents an SNR used in the $i^{th}$ downlink transmission.

In some embodiments, $\Delta offset(i)$ may be obtained through calculation according to the following formula 2 or formula 3.

$$\Delta offset(i)=\Delta offset(i-1)+\delta*1_{ACK}-9\delta*1_{NACK} \quad \text{Formula 2}$$

$$\Delta offset(i)=min\{\Delta offset(i-1)+\delta*1_{ACK}-9\delta*1_{NACK}, offset_{max}\} \quad \text{Formula 3}$$

In the formulas, $\delta$ is an adjustment step, where $\delta$ may be set by the network device according to an actual requirement, and a larger $\delta$ indicates a larger step for each SNR adjustment; $1_{ACK}$ and $1_{NACK}$ are determined by the network device based on an ACK/NACK fed back by the terminal device, where if the terminal device feeds back an ACK (the ACK indicates that downlink data decoding succeeds), $1_{ACK}=1$ and $1_{NACK}=0$, or if the terminal device feeds back a NACK (the NACK indicates that downlink data decoding fails), $1_{ACK}=0$ and $1_{NACK}=1$; and $offset_{max}$ may be a preset value, for example, 10 dB.

For example, $SNR_{CQI}=20$ dB, $\delta=1$ dB, and $\Delta offset(0)=0$. It is assumed that for a first downlink data transmission, the network device determines, according to the foregoing formula 1 and formula 2, that $SNR(1)=SNR_{CQI}=20$ dB for a first time of downlink scheduling.

When the terminal device successfully decodes downlink data of the first transmission and feeds back an ACK to the network device, based on the ACK, the network device determines, according to the foregoing formula 1 and formula 2, $SNR(2)=SNR_{CQI}+\Delta offset(1)+\delta*1=21$ dB for a second time of downlink scheduling.

When the terminal device successfully decodes downlink data of a second transmission and feeds back an ACK to the network device, the network device determines, based on the ACK according to the foregoing formula 1 and formula 2, $SNR(3)=SNR_{CQI}+\Delta offset(2)+\delta*1=22$ dB for a third time of downlink scheduling.

When the terminal device fails to decode downlink data of a third transmission and feeds back a NACK to the network device, the network device determines, based on the NACK according to the foregoing formula 1 and formula 2, $SNR(4)=SNR_{CQI}+\Delta offset(3)-9\delta*1=13$ dB for a fourth time of downlink scheduling.

It can be learned from the foregoing example that, compared with SNR adjustment only based on CQI, the network device can perform adaptive SNR adjustment more timely and accurately by using the OLLA technology. For example, for the second time of downlink scheduling, it can be determined based on the CQI that the SNR is 20 dB, while it can be determined that the SNR is 21 dB based on an ACK/NACK. Based on the SNR determined based on the ACK/NACK, an actual downlink condition can be timely tracked.

However, in a highly-reliable and low latency communication technology, for example, in an ultra-reliable and low latency communication (ultra-reliable and low latency communication, URLLC) technology, due to high reliability of the ultra-reliable and low latency communication technology, there is a low probability that the terminal device fails to parse downlink data. For example, the probability of parsing failure is about $10^{-6}$. In other words, for URLLC, the network device may receive only one NACK when the network device sends downlink data for $10^6$ times. Therefore, based on the OLLA technology, as downlink data transmission continues, the SNR keeps increasing. It can be learned that the OLLA technology cannot adapt to the highly-reliable and low latency communication technology and track an actual downlink condition with maximum performance.

To ensure timely adaptive adjustment of a downlink in the highly-reliable and low latency communication technology, this application provides a communication method. In the method, a terminal device may feed back, to a network device, information obtained by parsing downlink data, so that the network device performs adaptive adjustment on a downlink based on the information obtained by the terminal device by parsing the downlink data. For example, the information obtained by parsing the downlink data may include but is not limited to one or more of the following: a cause for failure in parsing downlink data, a communication link compensation value, a block error rate, a result of parsing downlink data by the terminal device, and reliability of the parsing result.

For example, in this embodiment of this application, the network device may timely adjust a downlink SNR based on the information obtained by the terminal device by parsing the downlink data, so that the network device can timely select an appropriate modulation and coding scheme (modulation and coding scheme, MCS) based on the SNR, and then transmitted data meets a requirement. The MCS is used to describe a modulation scheme and a code rate used for transmitting information.

Further, the network device may indicate, by using MCS indication information (for example, MCS index, $I_{MCS}$), an MCS used when the terminal device transmits data. Refer to the following Table 1. For example, Table 1 shows an example of an MCS parameter configuration. One $I_{MCS}$ corresponds to a group of a modulation order, a code rate, and spectral efficiency, where different modulation orders correspond to different modulation schemes. For example, when $I_{MCS}$ is 3, the modulation order Qm is 2, and the code rate Rx is 0.4385. It should be noted that a value shown in Table 1 is a value obtained by multiplying the code rate Rx by 1024. For example, when $I_{MCS}$ is 3, a corresponding value is 449, and a corresponding code rate is 449/1024=0.4385.

In Table 1, a modulation order Qm=2 corresponds to a quadrature phase shift keying (quadrature phase shift keying, QPSK) modulation scheme, Qm=4 corresponds to 16 quadrature amplitude modulation (quadrature amplitude modulation, QAM), Qm=6 corresponds to 64 QAM, and Qm=8 corresponds to 256 QAM.

Table 1

| $I_{MCS}$ | Modulation order $Q_m$ | Code rate Rx multiplied by 1024 | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |

(continued)

| $I_{MCS}$ | Modulation order $Q_m$ | Code rate Rx multiplied by 1024 | Spectral efficiency |
|---|---|---|---|
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved | |
| 29 | 4 | Reserved | |
| 30 | 6 | Reserved | |
| 31 | 8 | Reserved | |

It should be noted that Table 1 is merely an example of an MCS parameter configuration. A specific MCS parameter configuration is not limited in this application. For example, the network device may select a specific MCS parameter configuration based on different reliability requirements. For specific descriptions of the MCS, refer to explanations and descriptions in conventional technologies. Details are not described again in this application.

It should be further noted that the MCS parameter configuration can be represented by using tables in a plurality of different forms. That is, during data transmission, a table used by a device may be selected. During data transmission, a specific table for reference may be further determined based on indication information.

For example, a communication method provided in this application can be applied to implementation of the OLLA technology. Specifically, in addition to information about whether downlink data is successfully parsed, a terminal device may feed back, to a network device, information obtained by parsing the downlink data by the terminal device. For example, the information about whether downlink data is successfully parsed may include an ACK or a NACK, where the ACK indicates that downlink data is successfully parsed, and the NACK indicates that downlink data fails to be parsed.

A communication system 10 that includes a network device 110 and a terminal device 120 shown in FIG. 1 is used in the following descriptions as an example, to describe in detail a communication method provided in an embodiment of this application with reference to the accompanying drawings.

In this embodiment of this application, the network device 110 may be configured to send downlink data to the terminal device, for example, send the downlink data to the terminal device through a physical downlink shared channel (physical downlink shared channel, PDSCH). The network device 110 may be further configured to receive, from the terminal device, information about whether the terminal device successfully parses the downlink data, and receive, from the terminal device, information obtained by the terminal device by parsing the downlink data.

Further, the network device 110 may be further configured to indicate, by using a physical downlink control channel (physical downlink control channel, PDCCH), the terminal device to receive downlink data carried in the PDSCH, schedule the terminal device to send uplink data through a physical uplink shared channel (physical uplink shared channel, PUSCH), receive information carried in a physical uplink control channel (physical uplink control channel, PUCCH) from the terminal device, receive uplink data carried in the PUSCH, send a CSI-RS to the terminal device, and receive CSI, channel interference, and/or the like fed back by the terminal device.

The terminal device 120 is configured to receive information that is carried in the PDSCH and the PDCCH and that is from the network device 110, parse downlink data carried in the PDSCH, and feed back, to the network device 110 based on a condition of parsing the downlink data, information about whether downlink data is successfully parsed, and feed back, to the network device 110, information obtained by parsing the downlink data.

Further, the terminal device 120 may be further configured to receive a CSI-RS from the network device 110, and feed back CSI, channel interference, and/or the like to the network device 110.

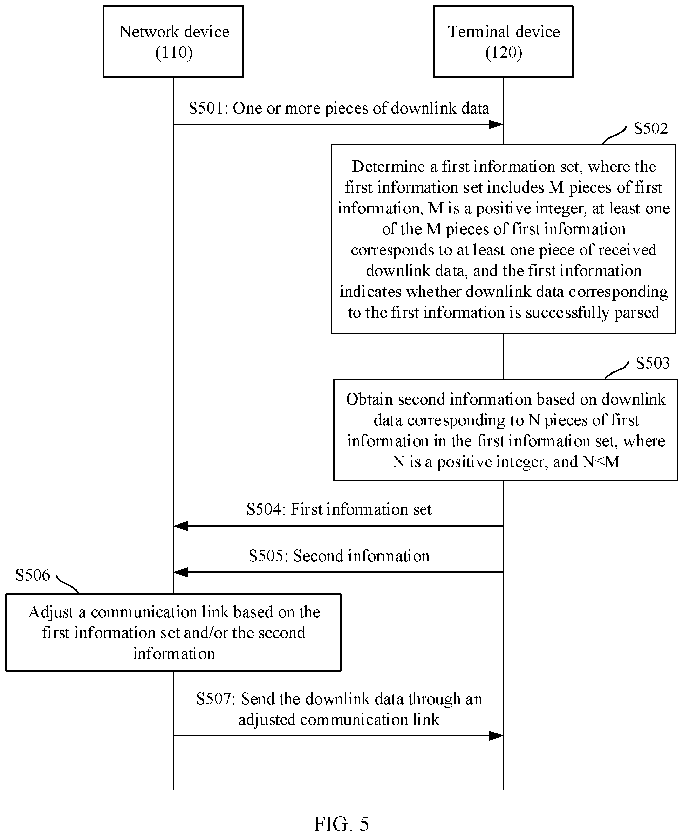

As shown in FIG. 5, a communication method provided in this embodiment of this application may include the following steps S501 to S506.

S501: A network device sends one or more pieces of downlink data to a terminal device.

For example, the network device may send one or more pieces of downlink data to the terminal device through a physical downlink shared channel (physical downlink shared channel, PDSCH).

In some embodiments, the network device may indicate a time domain position of the PDSCH by using time domain resource indication information. For example, the time domain resource indication information may be carried in a PDCCH.

In some embodiments, the network device may indicate the time domain resource indication information to the terminal device by using downlink control information (downlink control information, DCI) or upper layer signaling.

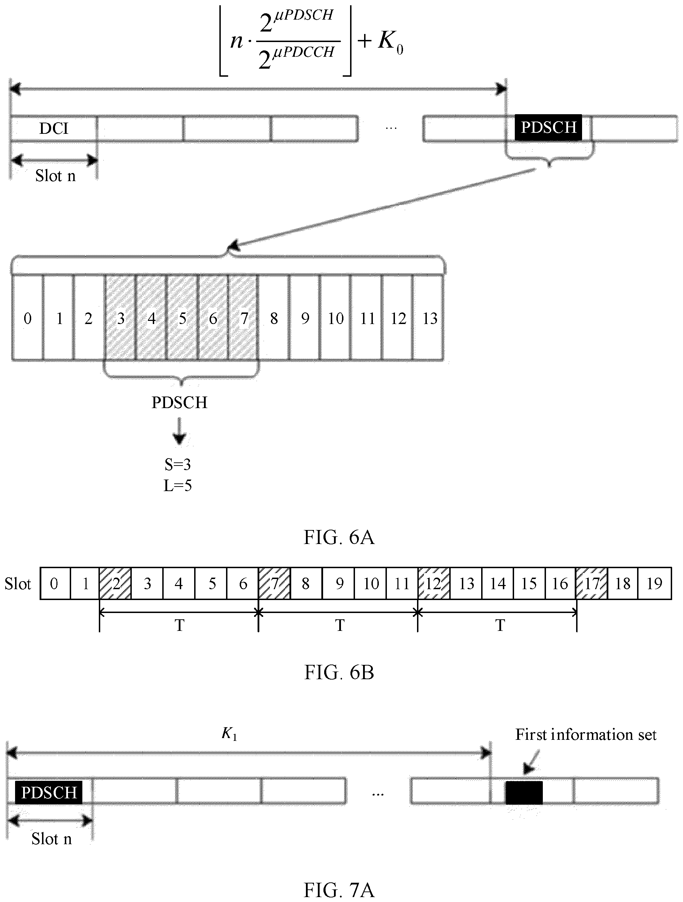

For example, the following information may be included: a mapping type, K0, S, and L. As shown in FIG. 6A, a mapping manner indicates a mapping type of a PDSCH, for example, a type A (type A) or a type B (type B); a slot in which the DCI is located is a slot n, K0 represents a slot interval between a PDSCH and a PDCCH corresponding to the PDSCH, S and L respectively represent a start position and a length of a slot interval indicated by K0, and $2^{\mu PDSCH}$ and $2^{\mu PDCCH}$ respectively are subcarrier spacings for transmitting a PDCCH and a PDSCH.

For example, for a correspondence between a value of the $2^{\mu PDSCH}$ and the subcarrier spacing used for transmitting the PDCCH and a correspondence between a value of the $2^{\mu PDCCH}$ and the subcarrier spacing used for transmitting the PDSCH, refer to the following Table 2.

**Table 2**

| $2^{\mu PDSCH}/2^{\mu PDCCH}$ | Subcarrier spacing |
|---|---|
| 0 | 15 kHz |
| 1 | 30 kHz |
| 2 | 60 kHz |
| 3 | 120 kHz |

In some embodiments, the network device may send the time domain resource indication information to the terminal device in a form of a time domain resource indication index (index), or the network device may send the time domain resource indication information to the terminal device in a form of a time domain resource indication index (index) and a dmrs-Position, where the dmrs-Position is a first symbol position of a demodulation reference signal (demodulation reference signal, DMRS).

For example, the following Table 3 shows an example of a time domain resource indication index. As shown in Table 3, when the domain resource indication index is 1 and the dmrs-Position is 2, K0=0, S=2, and L=12.

**Table 3**

| Index | Dmrs-Position | Mapping manner | K0 | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |

(continued)

| Index | Dmrs-Position | Mapping manner | K0 | S | L |
|---|---|---|---|---|---|
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

It should be noted that Table 3 is merely an example of a time domain resource indication index. A specific form and a parameter configuration of the time domain resource indication index are not limited in this application. For example, S and L may also be represented by using a start and length indicator (start and length indicator, SLIV). For specific descriptions of the time domain resource indication index, refer to explanations and descriptions in conventional technologies. Details are not described again in this application.

Further, in some embodiments of this application, the network device may further schedule downlink data to the terminal device by using first indication information, so that the terminal device can receive and parse the downlink data from the network device based on the first indication information.

For example, the first indication information may be DCI indication information. In this case, the downlink data is usually dynamically scheduled. For another example, the first indication information may be upper layer signaling. In this case, the downlink data is usually semi-persistently scheduled.

S502: The terminal device determines a first information set. The first information set includes M pieces of first information, where M is a positive integer. At least one of the M pieces of first information corresponds to at least one piece of received downlink data; and the first information indicates whether downlink data corresponding to the first information is successfully parsed.

For example, the first information may be parsing success indication information (for example, an ACK) or parsing failure indication information (for example, a NACK). The ACK indicates that the downlink data corresponding to the first information is successfully parsed, and the NACK indicates that parsing of the downlink data corresponding to the first information fails.

That at least one of the M pieces of first information corresponds to at least one piece of received downlink data may include at least the following cases.

1. In some embodiments, M is 1. To be specific, the first information set includes one piece of first information, where the one piece of first information corresponds to one piece of received downlink data. In other words, the first information set indicates whether the terminal device successfully parses the one piece of received downlink data. For example, the terminal device receives downlink data A in step S501, and the first information set includes one piece of first information, where the one piece of first information indicates whether the terminal device successfully parses the downlink data A. If the one piece of first information is "N", it indicates that the terminal device fails to parse the downlink data A.

2. In some other embodiments, M is 1. To be specific, the first information set includes one piece of first information, where the one piece of first information corresponds to a plurality of pieces of received downlink data. For example, it is assumed that the terminal device receives downlink data A and downlink data B in step S501, and the first information set includes one piece of first information, where the one piece of first information indicates whether the terminal device successfully parses the downlink data A and the downlink data B. If the one piece of first information is "A", it indicates that the terminal device successfully parses the downlink data A and the downlink data B.

3. In some other embodiments, M is greater than 1. To be specific, the first information set includes a plurality of pieces of first information.

In some cases, at least one piece of first information in the first information set may correspond to one piece of received downlink data. In other words, the at least one piece of first information in the first information set indicates whether the terminal device successfully parses the one piece of received downlink data.

For example, it is assumed that the terminal device receives downlink data A, downlink data B, and downlink data C in step S501, and the first information set includes three pieces of first information. The three pieces of first information respectively indicate whether the terminal device successfully parses the downlink data A, the downlink data B, and the downlink data C (for example, parsing fails, parsing succeeds, or parsing succeeds). For example, the first information set is "NAA", where "N" represents NACK, and "A" represents ACK. For another example, the first information set is "011", where "0" represents NACK, and " 1" represents ACK. The foregoing three pieces of first information in the first information set respectively indicate that the terminal device fails to parse the downlink data A, successfully parses the downlink data B, and successfully parses the downlink data C.

In some other cases, at least one piece of first information in the first information set may correspond to at least two pieces of received downlink data. In other words, the at least one piece of first information in the first information set indicates whether the terminal device successfully parses the at least two pieces of received downlink data.

For example, it is assumed that the terminal device receives downlink data A, downlink data B, downlink data C, and downlink data D in step S501, and the first information set includes two pieces of first information, for example, "NA", where "N" indicates that the terminal device fails to parse the downlink data A and the downlink data B, and "A" indicates that the terminal device successfully parses the downlink data C and the downlink data D.

In some other cases, at least two pieces of first information in the first information set may correspond to one piece of received downlink data. In other words, the at least two pieces of first information in the first information set indicate whether the terminal device successfully parses the one piece of received downlink data.

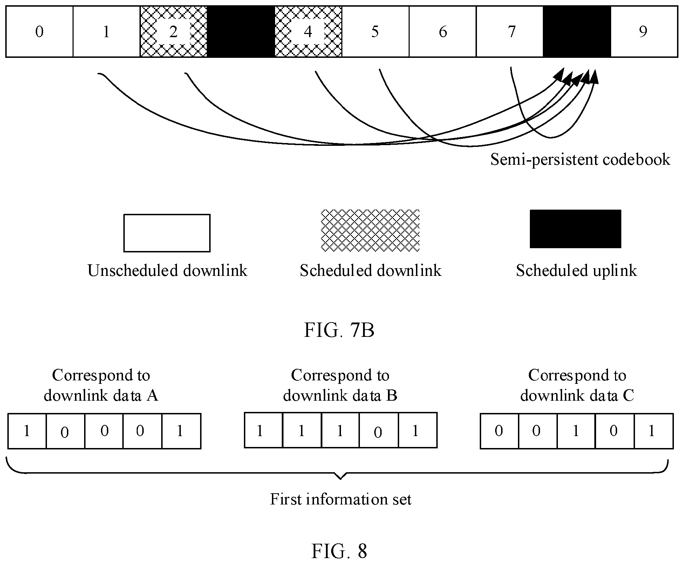

For example, when the terminal device feeds back a condition of the first information set through codeblock group (codeblock group, CBG) feedback, a plurality of pieces of first information in the first information set are used to indicate whether the terminal device successfully parses one piece of downlink data. In the manner of CBG feedback, one piece of downlink data corresponds to a plurality of CBGs, one CBG corresponds to one piece of first information, and each piece of first information indicates whether a corresponding CBG is decoded correctly or incorrectly. As shown in FIG. 8, the first information set includes 15 bits (bits), where the first five bits indicate whether a CBG corresponding to downlink data A is decoded correctly or incorrectly, five bits in the middle indicate whether a CBG corresponding to downlink data B is decoded correctly or incorrectly, and the last five bits indicate whether a CBG corresponding to downlink data C is decoded correctly or incorrectly.

It should be noted that, in some embodiments of this application, if the terminal device does not receive a piece of downlink data, the terminal device may also send corresponding first information to the network device. For example, if the terminal device does not receive the $j^{th}$ piece of downlink data, the terminal device may alternatively use parsing failure indication information (for example, "0", "N" or "00") as first information corresponding to the $j^{th}$ piece of downlink data, where $j \in (1, M)$. A specific policy used by the terminal device to determine at least one piece of first information based on parsing of at least one piece of downlink data is not limited in this application.

In some embodiments, when the first information set includes a plurality of pieces of first information (that is, M>1), the first information set may be fed back in a form of a codebook. The codebook is a sequence including a plurality of pieces of first information (for example, an ACK/NACK). For example, a first information set may be "NNAAN" if the terminal device parses five received PDSCHs and parsing results are respectively parsing failure, parsing failure, parsing success, parsing success, and parsing failure. In other words, feeding back the first information set in the form of the codebook means that the terminal device makes a bit sequence including a plurality of bits based on information about whether a plurality of received PDSCHs are successfully parsed, and then feeds back the bit sequence to the network device as a whole.

It should be noted that the foregoing method of codebook feedback is merely used as an example. For a case in which the first information set is fed back in a form of a codebook, a specific method for forming a codebook and a specific feedback method are not limited in embodiments of this application. For example, the codebook may be a dynamic codebook, a semi-persistent codebook (for example, a Type I codebook), or the like. A codebook size of the dynamic codebook dynamically changes with an actual data scheduling state. Generally, the dynamic codebook may be determined based on DCI and an automatic repeat request (hybrid automatic repeat request, HARQ) configuration. A codebook size of the semi-persistent codebook does not dynamically change with an actual data scheduling state. Generally, the size of the semi-persistent codebook may be predefined, or may be determined based on a parameter configured based on radio resource control (radio resource control, RRC), a candidate PDSCH receiving occasion set, a HARQ configuration, or the like.

In this embodiment of this application, a resource used to feed back the first information set may be indicated by the network device. For example, the network device may indicate a slot for the terminal device by using a K1. In the slot, based on indication information sent by the network device (for example, a PUCCH resource indicator (PUCCH resource indicator, PRI)) and a payload size (payload size), the terminal device determines a specific slot for sending the first information set to the network device.

Refer to FIG. 7A. FIG. 7A shows an example of a resource for feeding back a semi-persistent codebook. FIG. 7A shows the K1 indicated by the network device for the terminal device. A start of the K1 is a slot in which a PDSCH is located, and an end of the K1 is a slot in which the terminal device sends the first information set to the network device.

In some embodiments, the network device may indicate the K1 for the terminal device by performing the following two steps.

Step 1: The network device configures a selectable K1 set for the terminal device.

The selectable K1 set includes one or more K1. For example, the selectable K1 set is {1, 3, 4, 6, 7}.

Step 2: The network device sends indication information to the terminal device, to determine a K1 from the selectable K1 set.

For example, the indication information may be position information of the K1 in the selectable K1 set.

For example, it is assumed that the selectable K1 set is {1, 3, 4, 6, 7}, and the indication information indicates that K1 is the fifth in the optional K1 set, the K1 is 7.

Refer to FIG. 7B. FIG. 7B shows an example of a semi-persistent codebook. As shown in FIG. 7B, it is assumed that the K1 set is {1, 3, 4, 6, 7}. Therefore, a position of an uplink slot numbered 8 may correspond to downlink slots numbered 1, 2, 4, 5, and 7. An example in which a downlink slot is 1 is used. If the K1 is 7, an ACK/NACK corresponding to a PDSCH sent in the slot should be sent in the uplink slot numbered 8. Therefore, all PDSCHs through which downlink data may be sent in the slots 1, 2, 4, 5, and 7 have corresponding bit positions in the uplink slot 8. For example, it is assumed that there is only one possible PDSCH in one slot. In this case, there are five bit positions in the slot 8, respectively corresponding to the PDSCHs of the slots 1, 2, 4, 5, and 7. As shown in FIG. 7B, even if there is actual PDSCH transmission only in the slots 2 and 4, there are bit positions corresponding to PDSCHs of other slots in the slot 8. In some embodiments, if there is no actual downlink data transmission, the position corresponding to the codebook may be marked as NACK. In other words, in the codebook, bit positions corresponding to the slots 1, 5, and 7 are marked as NACK. Bit positions corresponding to slots 2 and 4 are determined based on actual decoding results.

S503: The terminal device obtains second information based on downlink data corresponding to N pieces of first information in the first information set, where N is a positive integer, and N≤M.

The second information is information obtained by the terminal device by parsing the received downlink data. For example, the second information is obtained by the terminal device in a process of parsing the downlink data. For example, the second information may be determined by the terminal device in an intermediate process of parsing the downlink data (for example, determined from variables obtained in the intermediate process of parsing the downlink data) or may be obtained after the terminal device completes parsing of the downlink data. For example, the second information may be obtained based on a soft information value obtained in a process of parsing the downlink data. For another example, the second information may be determined based on a result obtained when the downlink data is decoded. For still another example, the second information may be determined based on a quantity of iterations for decoding the downlink data.

Optionally, the second information indicates a channel state corresponding to the second information during downlink data transmission.

Optionally, the terminal device obtaining the second information based on the downlink data corresponding to the N pieces of first information in the first information set may specifically mean that each piece of downlink data corresponds to one piece of second information. For example, N is equal to 2, and two pieces of first information respectively corresponds to downlink data A and downlink data B. In this case, it may be understood that the terminal device obtains one piece of second information based on the downlink data A, and obtains another piece of second information based on the downlink data B.

Optionally, the terminal device obtaining the second information based on the downlink data corresponding to the N pieces of first information in the first information set may specifically mean that a plurality of pieces of downlink data correspond to one piece of second information. For example, N is equal to 1, and one piece of first information corresponds to two pieces of downlink data: downlink data A and downlink data B. In this case, it may be understood that the terminal device obtains one piece of second information based on the downlink data A and the downlink data B.

In embodiments of this application, the second information may include one or more of the following: a cause for failure in parsing downlink data, a communication link compensation value, a block error rate, a result of parsing downlink data by the terminal device, and reliability of the parsing result.

For example, the cause for failure in parsing downlink data may include but is not limited to one or more of the following: a high MCS, blockage, incorrect beam selection, or strong interference. The cause for failure in parsing downlink data may be used by the network device to adjust an SNR for next downlink transmission. For example, if the MCS is high, the MCS may be lowered to ensure reliability of next downlink transmission.

The communication link compensation value may include but is not limited to an SNR-offset and/or an MCS-offset.

As shown in the formula 1, it may be understood that, essentially, the OLLA technology is to add an SNR compensation value (that is, $\Delta$offset(i)) to an SNR that is determined based on CQI (that is, an $SNR_{CQI}$). Therefore, the terminal device may determine the SNR compensation value based on parsing of the downlink data, and feed back the SNR compensation value to the network device, so that the network device may adjust the SNR for next downlink transmission based on the SNR compensation value, and data transmission is performed based on an adjusted SNR.

Alternatively, the terminal device may determine an MCS compensation value based on parsing of the downlink data, and feed back the MCS compensation value to the network device, so that the network device may adjust an MCS of next downlink transmission based on the MCS compensation value, and data transmission is performed based on an adjusted MCS. For example, it is assumed that an $I_{MCS}$ corresponding to an MCS used for current transmission is 5. The terminal device gives the network device feedback that MCS-offset is -1 based on parsing of the downlink data. In this case, when the network device performs next downlink transmission, an MCS parameter configuration corresponding to $I_{MCS}$=4 can be used.

The block error rate indicates a block error rate (block error rate, BLER) corresponding to downlink data when the terminal device receives the downlink data. Optionally, the block bit error rate may be determined by the terminal device based on a state of a channel for downlink data transmission, or the block bit error rate may be determined by the terminal device based on an SNR for receiving downlink data. For example, it is detected that the SNR at the time of receiving the downlink data is 20 dB, and it is assumed that a BLER corresponding to the SNR=20 dB is $10^{-6}$. In this case, the terminal device may send the block error rate to the network device, so that the network device adjusts an SNR for next downlink transmission. A specific correspondence between an SNR and a BLER is not limited in this application. For example, the correspondence between the SNR and the BLER is specified by the network device, predefined by a protocol, or determined by the terminal device based on self-implementation.

The result of parsing the downlink data by the terminal device and reliability of the parsing result may be represented by soft-ACK.

The soft-ACK uses information of a plurality of bits, for example, two bits, to indicate the result of parsing the downlink data by the terminal device and the reliability of the parsing result. For example, "00" represents NACK; "01" represents an ACK and indicates that reliability of a parsing result is a first probability r1; 10" represents an ACK and indicates that reliability of a parsing result is a second probability r2; and " 11" represents an ACK and indicates that reliability of a parsing result is a third probability r3. For example, r1<r2<r3. In other words, "01" indicates successful parsing of downlink data and a low probability of successful decoding. Therefore, based on "01" fed back by the terminal device, the network device may lower the SNR for next downlink transmission, to ensure data transmission reliability. However, "11" indicates successful parsing of downlink data and a high probability of successful decoding. Therefore, based on "11" fed back by the terminal device, the network device may increase the SNR for next downlink transmission, to improve utilization of resources for data transmission.

Optionally, the second information is not an ACK.

Optionally, the second information is not an NACK.

Optionally, the second information is neither an ACK nor NACK information.

Optionally, the second information is different from the first information.

Optionally, the second information does not indicate that decoding of the downlink data corresponding to the second information succeeds or fails.

Optionally, the second information is used by the network device to perform OLLA adjustment.

Optionally, the second information describes a confidence interval for decoding the downlink data corresponding to the second information.

In some embodiments, M=1 and N=1. In other words, the first information set includes one piece of first information, and the second information is obtained by the terminal device by parsing downlink data corresponding to the one piece of first information in the first information set.

In some other embodiments, M=2 and N≥2. In other words, the first information set includes a plurality of pieces (for example, M pieces) of first information, and the second information is obtained by the terminal device by parsing downlink data corresponding to a plurality of pieces (for example, N pieces) of first information in the plurality of pieces of first information in the first information set. The foregoing method for determining the N pieces of first information is specifically described below.

In some other embodiments, M≥2, and N=1. In this case, large uplink transmission overheads caused when the terminal device sends, to the network device, information (that is, the second information) obtained by parsing downlink data corresponding to a plurality of pieces of first information can be reduced. In other words, the first information set includes a plurality of pieces of first information, and the second information is obtained by the terminal device by parsing downlink data corresponding to one piece of first information in the plurality of pieces (for example, M pieces) of first information in the first information set. For example, the second information is obtained by the terminal device by parsing downlink data corresponding to the $K^{th}$ piece of first information in the plurality of pieces (for example, M pieces) of first information in the first information set, where K is a positive integer, and K≤M. The foregoing method for determining the foregoing $K^{th}$ piece of first information is described below.

Optionally, content of the second information may also be related to first information corresponding to the second information. For example, the second information is a soft-ACK. If the first information corresponding to the second information is an ACK, the second information "00" represents an ACK and indicates that reliability of a parsing result is a first probability r1, the second information "01" represents an ACK and indicates that reliability of a parsing result is a second probability r2, and the second information "10" represents an ACK and indicates that reliability of a parsing result is a third probability r3. For example, r1<r2<r3. Similarly, if the first information corresponding to the second information is an NACK, the second information "00" represents a NACK and indicates that reliability of a parsing result is a first probability r1, the second information "01" represents a NACK and indicates that reliability of a parsing result is a second probability r2, and the second information "10" represents a NACK and indicates that reliability of a parsing result is a third probability r3. In other words, when the first information corresponding to the second information is the ACK, the second information describes the reliability of a parsing result in the case of the ACK, and when the first information corresponding to the second information is the NACK, the second information describes the reliability of a parsing result in the case of the NACK.

Optionally, a meaning of the second information is related to first information corresponding to the second information. For example, the second information is "00". If corresponding first information an NACK, the second information represents the NACK and indicates that reliability of a parsing result is the first probability r1. On the contrary, if the corresponding first information is an ACK, the second information represents the ACK and indicates that the reliability of a parsing result is the first probability r1. That is, when different pieces of first information are used, specific meanings of a same piece of second information (in this example, the second information is "00") may be different.

Optionally, a meaning of the second information may be obtained by the terminal device based on the downlink data corresponding to the N pieces of first information. For example, it is assumed that the terminal device does not receive the downlink data. In this case, the second information is in a first state. The first state indicates that the terminal device does not receive corresponding downlink data. For example, the first information set determined by the terminal device includes five pieces of first information, which are "NAANA", where "N" indicates an NACK, and "A" indicates an ACK. It is assumed that the second information is obtained based on downlink data corresponding to a first piece of first information. In this case, if the terminal device does not receive the downlink data corresponding to the first piece of first information, the second information is in the first state. A second state indicates that the terminal device does not receive the downlink data corresponding to the first piece of first information.

S504: The terminal device sends the first information set to network device.

For example, in this embodiment of this application, the terminal device may send the first information set to the network device through a PUSCH, or may send the first information set to the network device through a PUCCH. A specific sending manner is not limited in this application.

S505: The terminal device sends the second information to network device.

It should be noted that, in FIG. 5, the terminal device first performs step S503 (that is, obtains the second information based on the downlink data corresponding to the N pieces of first information in the first information set), then performs step S504 (that is, sends the first information set to network device), and then performs step S505 (that is, sends the second information to network device). Actually, the terminal device may alternatively first perform step S504, then perform step S503, and then perform step S505. A specific execution sequence of the foregoing steps is not limited in this application.

In addition, FIG. 5 shows an example in which the terminal device separately sends the first information set and the second information to the network device. However, a specific manner of sending the first information set and the second information to the network device by the terminal device is not limited in embodiments of this application.

For example, in some other embodiments, the terminal device may further send the first information set and the second information that are jointly coded to the network device. For example, the terminal device may send the first information set and the second information to the network device by using a joint code through a physical channel (for example, a PUCCH). For example, the first information set includes information of five bits, which are 01101, and the second information includes information of two bits, which are 11. In this case, the terminal device may jointly code the first information set and the second information into information of seven bits, for example, 0110111, and send the information to the network device. In some embodiments, a time-frequency resource used for sending the joint code is determined by the terminal device based on the first information set and the second information. For example, the terminal device may determine the time-frequency resource based on a total quantity of bits of the first information set and the second information. The foregoing example is still used for description. It is assumed that the first information set includes the information of five bits, and the second information includes the information of two bits. In this case, the first information set and the second information have seven bits of information in total, and the time-frequency resource used to carry the first information set and the second information is determined based on the seven bits. Due to joint coding, the terminal device does not determine a time-frequency resource used for sending the first information. In this case, complexity of implementing, by the terminal device, the communication method provided in embodiments of this application can be reduced.

In some other embodiments, the terminal device may further send the first information set and the second information that are separately coded to the network device. For example, the terminal device may separately send the first information set and the second information to the network device by using different time-frequency resources. In this manner, the terminal device needs to determine the time-frequency resources used for separately sending the first information set and the second information. However, in this manner, the first information set and the second information are sent independently, and therefore, the first information set and the second information do not affect each other. For example, if a payload (payload) of the first information set is incorrectly determined, sending of the second information is not affected. For another example, on a network device side, an error occurs in decoding the first information set. Because transmission of the second information is independent of transmission of the first information set, a transmission error of the second information caused by the transmission error of the first information set does not occur.

S506: The network device adjusts a communication link based on the first information set and/or the second information.

For example, the network device adjusts an SNR of the communication link based on the first information set and/or the second information.

For example, the network device may adjust the MCS for next downlink transmission based on, for example, a cause for failure in parsing downlink data with a high MCS (that is, the second information), to ensure reliability of next downlink transmission.

For another example, the network device may adjust the SNR for next downlink transmission based on, for example, a communication link compensation value of an SNR-offset (that is, the second information), to ensure reliability of next downlink transmission.

For still another example, the network device may adjust the MCS for next downlink transmission based on, for example, a communication link compensation value of an MCS-offset (that is, the second information), to ensure reliability of next downlink transmission.

For yet another example, the network device may adjust the SNR for next downlink transmission based on the result of parsing downlink data and the reliability of the parsing result (that is, the second information), to ensure reliability of next downlink transmission.

For still yet another example, the network device may adjust the SNR for next downlink transmission based on the NACK in the first information set. For example, the SNR adjustment method of the formula 1 is used to adjust the SNR for next downlink transmission, to ensure reliability of next downlink transmission.

For a further example, the network device may adjust the SNR for next downlink transmission based on a comprehensive analysis result obtained by comprehensively analyzing the first information set and the second information, to ensure reliability of next downlink transmission. Specific implementations are not exhaustively described herein in this application.

Further, as shown in FIG. 5, the communication method provided in embodiments of this application may include the following step S507.

S507: The network device sends the downlink data to the terminal device through an adjusted communication link.

It may be understood that, according to the communication method provided in embodiments of this application, after receiving the downlink data from the network device, in addition to feeding back the information about whether the downlink data is successfully parsed (that is, the first information set), the terminal device may feed back, to the network device, information obtained by the terminal device by parsing the downlink data (that is, the second information), so that the network device can perform adaptive adjustment on a downlink based on the first information set and/or the second information, thereby ensuring reliability of next downlink transmission.

Further, according to the communication method provided in embodiments of this application, when feeding back, to the network device, the information obtained by the terminal device by parsing the downlink data (that is, the second information), the terminal device may feed back second information corresponding to one piece of downlink data in a plurality of pieces of candidate downlink data. In this way, uplink transmission overheads of the terminal device are further reduced while it is ensured that the network device can perform adaptive adjustment on the downlink based on the first information set and/or the second information.

The following describes in detail, with reference to examples, several policies and methods for obtaining the second information by the terminal device based on the downlink data corresponding to the N pieces of first information in the first information set in embodiments of this application. Details of the first information set and the second information may include the following case 1, case 2, and case 3.

Case 1: M=1, and N=1.

In other words, the first information set indicates whether the terminal device successfully parses one piece of received downlink data, and the second information is obtained by the terminal device based on the downlink data corresponding to the first information in the first information set.

In Case 1, if the terminal device receives downlink data A in step S501, the first information set includes one piece of first information, where the one piece of first information indicates whether the terminal device successfully parses the downlink data A. Further, the terminal device parses the downlink data corresponding to the one piece of first information in the first information set, to obtain second information corresponding to the downlink data A.

Case 2: M=2, and N$\geq$ 2.

In other words, the first information set includes M pieces of first information, and the second information is obtained by the terminal device based on downlink data corresponding to N pieces of first information in the M pieces of first information in the first information set.

In Case 2, if the terminal device receives downlink data A, downlink data B, and downlink data C in step S501, the first information set includes three pieces of first information, where the three pieces of first information respectively indicate whether the terminal device successfully parses the downlink data A, the downlink data B, and the downlink data C. Further, the terminal device obtains the second information by parsing downlink data corresponding to a plurality of pieces (for example, two or three pieces) of first information in the three pieces of first information in the first information set.

In embodiments of this application, the terminal device may determine the N pieces of first information from the M pieces of first information based on one or more of the following: a predefined rule, network indication information, a preset scheduling rule, a preset priority rule, a preset transmission condition, a preconfigured downlink scheduling period, time domain resource information, or a communication protocol. The communication protocol may be specifically predefined in a protocol.

The following uses Manner 1 to Manner 7 as examples to describe several policies and methods for determining N pieces of first information in the first information set.

Manner 1: The terminal device determines N pieces of first information according to a predefined rule.

Optionally, the predefined rule may be preconfigured in the terminal device by the network device, or determined by the terminal device based on self-implementation, or predefined in a protocol, or configured by the network device. This is not limited in this embodiment of this application.

In some examples, the predefined rule may specify that the second information is obtained by parsing downlink data corresponding to the N pieces of first information in the first information set, or N is determined according to a predefined rule.

Optionally, the predefined rule may further specify positions of the N pieces of first information in the first information set. For example, the first information set is in a form of a codebook. For example, the predefined rule may further specify a sequence of the N pieces of first information in the codebook.

For example, it is assumed that the first information set includes M pieces of first information (respectively a first piece of first information, a second piece of first information, ..., an $i^{th}$ piece of first information, and a $M^{th}$ piece of first information), where i $\in$ (3, M-1). A predefined rule specifies that the terminal device sends, to the network device, second information obtained by parsing downlink data corresponding to the first piece of first information, the second piece of first information, and the last piece (that is, the $M^{th}$ piece) of first information (N pieces of first information in total) in the first information set. In this case, the terminal device can determine, according to the predefined rule, that the N pieces of first information include the first piece of first information, the second piece of first information, and the last piece (that is, the $M^{th}$ piece) of first information in the first information set. In this case, the terminal device may report, to the network device, the second information obtained by parsing the downlink data corresponding to the first piece of first information, the second piece of first information, and the last piece (that is, the $M^{th}$ piece) of first information in the first information set.

In some other examples, the predefined rule may specify that the terminal device determines, based on one or more of the following: network indication information, a preset scheduling rule, a preset priority rule, a preset transmission condition, a preconfigured downlink scheduling period, time domain resource information, a communication protocol, or the like, specific N pieces of first information that are in the first information set and that correspond to downlink data parsed to obtain the second information sent to the network device. For a specific method for determining, based on the network indication information, the preset scheduling rule, the preset priority rule, the preset transmission condition, the preconfigured downlink scheduling period, the time domain resource information, and the communication protocol, the specific pieces of first information that are in the first information set and that correspond to the second information sent to the network device, refer to descriptions of the following Manner 2 to Manner 7.

In some other examples, the terminal device may alternatively first determine a plurality of pieces of candidate first information according to a predefined rule, and further determine the N pieces of first information from the plurality of pieces of candidate first information based on one or more of the following: self-implementation, a protocol rule, network indication information, a preset scheduling rule, a preset priority rule, a preset transmission condition, a preconfigured downlink scheduling period, time domain resource information, a communication protocol, or the like.

Manner 2: The terminal device determines N pieces of first information based on network indication information.

Optionally, the network indication information may be sent by the network device to the terminal device.

Optionally, the N pieces of first information are indicated by network information. In this example, the network device indicates, by using the network indication information, the N pieces of first information corresponding to the second information fed back by the terminal device. For example, the network device may indicate, based on a current service requirement, the terminal device to report the second information, so that the second information fed back by the terminal device is more effectively applied to communication link adjustment.

In some examples, the network indication information may indicate the terminal device to send, to the network device, second information obtained by parsing downlink data corresponding to the N pieces of first information in the first information set.

Further, the network indication information may further indicate positions of the N pieces of first information in the first information set. For example, the first information set is in a form of a codebook. For example, the network indication information may further specify a sequence of the N pieces of first information in the codebook.

For example, it is assumed that the first information set includes M pieces of first information (respectively a first piece of first information, a second piece of first information, ..., an $i^{th}$ piece of first information, and a $M^{th}$ piece of first information), where $i \in (3, M-1)$. The network indication information indicates the terminal device to send, to the network device, second information obtained by parsing downlink data corresponding to the first piece of first information, the second piece of first information, and the last piece (that is, the $M^{th}$ piece) of first information (N pieces of first information in total) in the first information set. In this case, the terminal device can determine, based on the network indication information, that the N pieces of first information include the first piece of first information, the second piece of first information, and the last piece (that is, the $M^{th}$ piece) of first information in the first information set. In this case, the terminal device may report, to the network device, the second information obtained by parsing the downlink data corresponding to the first piece of first information, the second piece of first information, and the last piece (that is, the $M^{th}$ piece) of first information in the first information set.

In some other examples, the network indication information may indicate the terminal device to determine, based on one or more of the following: a predefined rule, a preset scheduling rule, a preset priority rule, a preset transmission condition, a preconfigured downlink scheduling period, time domain resource information, a communication protocol, or the like, specific pieces of first information that are in the first information set and that correspond to the second information sent to the network device. For a specific method implemented based on the network indication information, the preset scheduling rule, the preset priority rule, the preset transmission condition, the preconfigured downlink scheduling period, the time domain resource information, and the communication protocol, refer to descriptions of the foregoing Manner 1 and descriptions of the following Manner 3 to Manner 7.

In some embodiments, the network indication information may be DCI indication information. The DCI indication information is used by the terminal device to determine the N pieces of first information.

In some examples, the first information set includes M pieces of first information. At least one piece of first information in the M pieces of first information corresponds to at least one piece of downlink data. In DCI indication information corresponding to the at least one piece of downlink data, if N pieces of DCI indication information indicate the terminal device to report second information obtained by parsing corresponding downlink data, the terminal device can determine that the N pieces of first information include first information corresponding to the N pieces of DCI indication information.

In some examples, the first information set includes M pieces of first information. At least one piece of first information in the M pieces of first information corresponds to at least one piece of downlink data, and the terminal device determines the N pieces of first information based on DCI corresponding to the at least one piece of downlink data. The terminal device determines the second information based on the downlink data corresponding to the N pieces of first information.

Optionally, the N pieces of first information are determined based on the DCI corresponding to the downlink data that corresponds to the N pieces of first information.

For example, it is assumed that the first information set includes three pieces of first information, and the three pieces of first information respectively correspond to received downlink data A, downlink data B, and downlink data C, where DCI indication information corresponding to the downlink data A and DCI indication information corresponding to the downlink data C indicate the terminal device to report second information obtained by parsing the corresponding downlink data. In this case, the terminal device can determine that the N pieces of first information include the first information corresponding to the downlink data A and the first information corresponding to the downlink data C. In this case, the terminal device may report, to the network device, second information obtained by parsing the downlink data A and the downlink data C.

In some other examples, the terminal device may alternatively first determine a plurality of pieces of candidate first information based on the network indication information (for example, the DCI indication information), and further determine the N pieces of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, the first information set includes M pieces of first information. At least one piece of first information in the M pieces of first information corresponds to at least one piece of downlink data. In DCI indication information corresponding to the at least one piece of downlink data, if y pieces of DCI indication information indicate the terminal device to report second information obtained by parsing corresponding downlink data, the terminal device can determine the N pieces of first information from first information corresponding to the y pieces of DCI indication information, where N<y, y is a positive integer, and y≤M.

In an implementation, the terminal device may determine the N pieces of first information from the y pieces of first information based on self-implementation; the terminal device may determine the N pieces of first information from the y pieces of first information based on a predefined rule, a protocol rule, network indication information, or the like; or the terminal device may determine the N pieces of first information from the y pieces of first information based on a preset scheduling rule, a preset priority rule, a preset transmission condition, a preconfigured downlink scheduling period, time domain resource information, a communication protocol, or the like. A specific rule for determining the N pieces of first information from the y pieces of first information is not limited in this application.

For example, it is assumed that the first information set includes four pieces of first information, and the four pieces of first information respectively correspond to received downlink data A, downlink data B, downlink data C, and downlink data D, where DCI indication information corresponding to the downlink data A, DCI indication information corresponding to the downlink data C, and DCI indication information corresponding to the downlink data D indicate the terminal device to report second information obtained by parsing the corresponding downlink data. Further, the network indication information indicates the terminal device to send, to the network device, second information obtained by parsing downlink data corresponding to the first and the last in the plurality of determined pieces of candidate first information. In this case, the terminal device can determine that the N pieces of first information include the first information corresponding to the downlink data A and the first information corresponding to the downlink data D. In this case, the terminal device may report, to the network device, second information obtained by parsing the downlink data A and the downlink data D.

It should be noted that, in this embodiment of this application, if the terminal device does not receive downlink data corresponding to an $x^{th}$ piece of first information, or the terminal device does not receive DCI indication information corresponding to the $x^{th}$ piece of first information, the terminal device does not report corresponding second information, where $x \in (1, y)$. For example, if the terminal device does not receive a specific piece of downlink data, the terminal device may also send corresponding first information to the network device. For example, if the terminal device does not receive an $x^{th}$ piece of downlink data, the terminal device may alternatively use parsing failure indication information (for example, "0", "N" or "00") as first information corresponding to the $x^{th}$ piece of downlink data. In this case, the terminal device does not report corresponding second information. In this case, when the terminal device does not report the second information, overheads of reporting the second information by the terminal device can be saved.

Optionally, the second information reported by the terminal device is in a second state if the terminal device does not receive the downlink data corresponding to the $x^{th}$ piece of first information, or the terminal device does not receive the DCI indication information corresponding to the $x^{th}$ piece of first information, or the DCI information corresponding to the $x^{th}$ piece of first information does not indicate the terminal device to report the second information. The second state indicates that the terminal device does not receive corresponding downlink data, or indicates that the terminal device does not receive corresponding DCI indication information, or indicates that a DCI of corresponding downlink data does not indicate the terminal device to report second information.

Manner 3: The terminal device determines N pieces of first information according to a preset scheduling rule.

Optionally, downlink data corresponding to the N pieces of first information that are determined by the terminal device according to the preset scheduling rule is scheduled in a preset data scheduling manner.

Optionally, the preset scheduling rule indicates that the downlink data corresponding to the N pieces of first information is scheduled in the preset data scheduling manner.

For example, the preset data scheduling manner may include but is not limited to semi-persistent scheduling and dynamic scheduling.

Optionally, the downlink data corresponding to the N pieces of first information that are determined by the terminal device according to the preset scheduling rule is dynamically scheduled or semi-persistently scheduled.

Optionally, the preset scheduling rule indicates that the downlink data corresponding to the N pieces of first information is semi-persistently scheduled, or the preset scheduling rule indicates that the downlink data corresponding to the N pieces of first information is dynamically scheduled.

For example, it is assumed that the preset data scheduling manner is dynamic scheduling, the first information set includes three pieces of first information, and the three pieces of first information respectively correspond to received downlink data A, downlink data B, and downlink data C, where the downlink data A is semi-persistently scheduled, and the downlink data B and the downlink data C are dynamically scheduled. In this case, the terminal device can determine, according to the preset scheduling rule, that the N pieces of first information include first information corresponding to the downlink data B and first information corresponding to the downlink data C. In this case, the terminal device may report, to the network device, second information obtained by parsing the downlink data B and the downlink data C.

Optionally, in this embodiment of this application, the terminal device may determine a data scheduling manner based on a received message. For example, if downlink data is scheduled by using DCI indication information, the downlink data is usually dynamically scheduled; and if downlink data received by the terminal device from the network device is configured by using upper layer signaling, the downlink data is usually semi-persistently scheduled.

Optionally, the dynamic scheduling may mean that information such as a time-frequency resource and an MCS of downlink data is indicated by using DCI. Optionally, the semi-persistent scheduling may mean that information such as a time-frequency resource and an MCS of downlink data is indicated by using upper layer signaling.

In some examples, the terminal device may alternatively first determine a plurality of pieces of candidate first information according to the preset scheduling rule, and further determine the N pieces of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the preset data scheduling manner is dynamic scheduling, the first information set includes four pieces of first information, and the four pieces of first information respectively correspond to received downlink data A, downlink data B, downlink data C, and downlink data D, where the downlink data A, the downlink data B, and the downlink data C are dynamically scheduled, and the downlink data D is semi-persistently scheduled. In this case, the terminal device may determine, according to the preset scheduling rule, that first information corresponding to the downlink data A, first information corresponding to the downlink data B, and first information corresponding to the downlink data C are pieces of candidate first information.

Further, it is assumed that the predefined rule specifies that the terminal device sends, to the network device, second information obtained by parsing the first piece of downlink data and the last piece of downlink data in the three determined pieces of downlink data. In this case, the terminal device may further determine, according to the predefined rule, that the N pieces of first information include the first information corresponding to the downlink data A and the first information corresponding to the downlink data C. In this case, the terminal device may report, to the network device, second information obtained by parsing the downlink data A and the downlink data C.

Manner 4: The terminal device determines N pieces of first information according to a preset priority rule.

Optionally, priorities of the N pieces of first information that are determined by the terminal device according to the preset priority rule are priorities specified in a protocol, preset priorities, or priorities indicated by a network.

Optionally, the preset priority rule indicates that the priorities corresponding to the N pieces of first information are priorities specified in a protocol, preset priorities, or priorities indicated by a network.

The preset priorities, the priorities specified in a protocol, or the priorities indicated by a network may include but is not limited to one or more types of priorities. For example, the priority may be a high priority, or the priority may be a low priority.

The priority indicated by a network may be a priority indicated by the network device, for example, a priority indicated by the network device with indication information.

For example, it is assumed that priority categories corresponding to the M pieces of first information in the first information set include a high priority, a low priority, and a medium priority. In this case, the preset priorities may include one or more of the high priority, the low priority, and the medium priority.

For example, the preset priorities, the priorities specified in a protocol, or the priorities indicated by a network are high priorities. Optionally, the priorities of the foregoing N pieces of first information that are determined by the terminal device according to the preset priority rule are high priorities. Optionally, the preset priority rule indicates that the priorities of the N pieces of first information are high priorities.

For another example, the preset priorities, the priorities specified in a protocol, or the priorities indicated by a network are medium priorities. Optionally, the priorities of the foregoing N pieces of first information that are determined by the terminal device according to the preset priority rule are medium priorities. Optionally, the preset priority rule indicates that the priorities of the N pieces of first information are medium priorities.

For another example, the preset priorities, the priorities specified in a protocol, or the priorities indicated by a network are low priorities. Optionally, the priorities of the foregoing N pieces of first information that are determined by the terminal device according to the preset priority rule are low priorities. Optionally, the preset priority rule indicates that the priorities of the N pieces of first information are low priorities.

For another example, the preset priorities, the priorities specified in a protocol, or the priorities indicated by a network includes a high priority and a low priority. Optionally, in the N pieces of first information that are determined by the terminal device according to the preset priority rule, a priority of at least one piece of first information is a high priority, and a priority of at least one piece of first information is a low priority. Optionally, the preset priority rule indicates that, in the N pieces of first information, a priority of at least one piece of first information is a high priority, and a priority of at least one piece of first information is a low priority.

Optionally, the priority indicated by a network may include but is not limited to a priority indicated by using DCI indication information or a priority indicated by using upper layer signaling configuration information.

For example, it is assumed that the first information set includes four pieces of first information, and the four pieces of first information respectively correspond to received downlink data A, downlink data B, downlink data C, and downlink data D, where priorities of first information corresponding to the downlink data A and first information corresponding to the downlink data D are high priorities, and priorities of first information corresponding to the downlink data B and first information corresponding to the downlink data C are low priorities. In some examples, the terminal device may determine, according to the preset priority rule, that the priorities of the N pieces of first information are high priorities. In this case, the N pieces of first information are the first information corresponding to the downlink data A and the first information corresponding to the downlink data D. Further, the terminal device may determine second information based on the downlink data A and the downlink data D. Further, the terminal device may report, to the network device, the second information obtained by parsing the downlink data A and the downlink data D. Alternatively, in some other examples, the terminal device may determine, according to the preset priority rule, that the priorities of the N pieces of first information are low priorities. In this case, the N pieces of first information are the first information corresponding to the downlink data B and the first information corresponding to the downlink data C. Further, the terminal device may determine second information based on the downlink data B and the downlink data C. Further, the terminal device may report, to the network device, the second information obtained by parsing the downlink data B and the downlink data C.

Optionally, for each type of priority, a specific piece of first information corresponding to the second information that is fed back may be determined by the terminal device based on one or more of the following: self-implementation, a protocol rule, a preset scheduling rule, a preset priority rule, a preset transmission condition, a preconfigured downlink scheduling period, time domain resource information, a communication protocol, or the like. This is not limited in this application.

In some examples, the terminal device may alternatively first determine a plurality of pieces of candidate first information according to the preset priority rule, and further determine the N pieces of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the preset priorities, the priorities specified in a protocol, or the priorities indicated by a network are low priorities, the first information set includes four pieces of first information, and the four pieces of first information respectively correspond to received downlink data A, downlink data B, downlink data C, and downlink data D, where a priority of first information corresponding to the downlink data A is a high priority, and priorities of first information corresponding to the downlink data B, first information corresponding to the downlink data C, and first information corresponding to the downlink data D are low priorities. In this case, the terminal device may determine, according to the preset priority rule, that the first information corresponding to the downlink data B, the first information corresponding to the downlink data C, and the first information corresponding to the downlink data D are pieces of candidate first information.

Further, if the preset data scheduling manner specified by the preset scheduling rule is dynamic scheduling, the downlink data B is semi-persistently scheduled, and the downlink data C and the downlink data D are dynamically scheduled, the terminal device can determine, according to the preset scheduling rule, that the N pieces of first information include the first information corresponding to the downlink data B and the first information corresponding to the downlink data C. In this case, the terminal device may report, to the network device, second information obtained by parsing the downlink data B and the downlink data C.

Optionally, in the M pieces of first information included in the first information set, at least one piece of first information is of high priority, and at least one piece of first information is of low priority.

Manner 5: The terminal device determines N pieces of first information based on a preset transmission condition.

In some embodiments, downlink data corresponding to the N pieces of first information that are determined by the terminal device based on a preset transmission condition satisfies the preset transmission manner.

In some embodiments, the preset transmission condition is used to determine that the downlink data corresponding to the N pieces of first information satisfies the preset transmission manner.

For example, the preset transmission manner may include but is not limited to initial transmission or retransmission.

Optionally, the downlink data corresponding to the N pieces of first information that are determined by the terminal device based on the preset transmission condition is initially transmitted or retransmitted. Optionally, the preset transmission condition may be determined by the terminal device based on self-implementation, or may be determined by the terminal device based on a predefined rule, a protocol rule, network indication information, or the like. This is not limited in this application.

For example, it is assumed that the first information set includes five pieces of first information, and the five pieces of first information respectively correspond to received downlink data A, downlink data B, downlink data C, downlink data D, and downlink data E, where the downlink data A, the downlink data C, and the downlink data E are initially transmitted data, and the downlink data B and the downlink data D are retransmitted data.

In some examples, it is assumed that the preset transmission manner is initial transmission. In this case, the terminal device can determine, based on the preset transmission condition, that the N pieces of first information include first information corresponding to the downlink data A, first information corresponding to the downlink data C, and first information corresponding to the downlink data E. Further, the terminal device may report, to the network device, second information obtained by parsing the downlink data A, the downlink data C, and the downlink data E.

In some other examples, it is assumed that the preset transmission manner is retransmission. In this case, the terminal device can determine, based on the preset transmission condition, that the N pieces of first information include the first information corresponding to the downlink data B and the first information corresponding to the downlink data D. Further, the terminal device may report, to the network device, second information obtained by parsing the downlink data B and the downlink data D.

In some other embodiments, MCS indication information (for example, $I_{MCS}$) corresponding to the downlink data that corresponds to the N pieces of first information is greater than a preset threshold, where the N pieces of first information are determined by the terminal device based on the preset transmission condition.

Optionally, the preset transmission condition is used to determine that the downlink data corresponding to the N pieces of first information is first downlink data. The first downlink data is downlink data with a largest MCS index in downlink data corresponding to M pieces of first information in the first information set. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 6, and an MCS index of the downlink data C is 7. In this case, the N pieces of first information are first information corresponding to the downlink data C. For another example, the MCS index of the downlink data A is 5, an MCS index of the downlink data B is 6, and an MCS index of the downlink data C is 6. In this case, the N pieces of first information are first information corresponding to the downlink data B and the first information corresponding to the downlink data C.

Optionally, the preset transmission condition is used to determine that the downlink data corresponding to the N pieces of first information is second downlink data. The second downlink data is downlink data with a minimum MCS index in the downlink data corresponding to the M pieces of first information in the first information set. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 6, and an MCS index of the downlink data C is 7. In this case, the N pieces of first information are first information corresponding to the downlink data A. For another example, the MCS index of the downlink data A is 5, the MCS index of the downlink data B is 5, and the MCS index of the downlink data C is 6. In this case, the N pieces of first information are the first information corresponding to the downlink data A and first information corresponding to the downlink data B.

Under a same channel condition, larger MCS indication information (for example, $I_{MCS}$) indicates a lower reliability of downlink transmission under a same channel condition. It may be understood that, under a same channel condition, larger MCS indication information (for example, $I_{MCS}$) indicates an upper possibility that a transmission error occurs. If the second information is generated based on MCS indication information greater than the preset threshold, reliability is upper when the network device performs downlink adjustment by using the second information.

For example, it is assumed that the first information set includes three pieces of first information, and the three pieces of first information respectively correspond to received downlink data A, downlink data B, and downlink data C. An $I_{MCS}$ corresponding to the downlink data A and an $I_{MCS}$ corresponding to the downlink data B are 6, and an $I_{MCS}$ corresponding to the downlink data B is 5. The $I_{MCS}$ corresponding to the downlink data A and the $I_{MCS}$ corresponding to the downlink data B are larger than the $I_{MCS}$ corresponding to the downlink data B. In this case, the terminal device may determine, based on the preset transmission condition, that the N pieces of first information include first information corresponding to the downlink data A and first information corresponding to the downlink data B. In this case, the terminal device may report, to the network device, second information obtained by parsing the downlink data A and the downlink data B.

It should be noted that, for MCS indication information that is based on different MCS parameter configuration tables, the N pieces of first information may be determined with an MCS parameter configuration table being a unit. For example, a specific MCS parameter configuration table used for determining the N pieces of first information may be determined based on self-implementation, a protocol rule, a predefined rule, network indication information, a protocol specification, or the like.

It is assumed that the downlink data corresponding to the M pieces of first information in the first information set includes downlink data A and downlink data B, an MCS parameter configuration table corresponding to the downlink data A is an MCS table 1, and an MCS parameter configuration table corresponding to the downlink data B is an MCS table 2. It should be noted that, in this case, it can be determined, based on the preset transmission condition, that the downlink data corresponding to the N pieces of first information includes third downlink data. If the preset transmission condition indicates that an MCS parameter configuration table corresponding to the third downlink data is the MCS table 1, the third downlink data includes the downlink data A. If the preset transmission condition indicates that an MCS parameter configuration table corresponding to the third downlink data is the MCS table 2, the third downlink data includes the downlink data B.

Optionally, in the foregoing example, if the third downlink data includes the downlink data A, the third downlink data does not include the downlink data B.

Optionally, in the foregoing example, if the third downlink data includes the downlink B, the third downlink data does not include the downlink data A.

In some other examples, the terminal device may alternatively first determine a plurality of pieces of candidate first information based on the preset transmission condition, and further determine the N pieces of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the first information set includes four pieces of first information, and the four pieces of first information respectively correspond to received downlink data A, downlink data B, downlink data C, and downlink data D. An $I_{MCS}$ corresponding to the downlink data A, an $I_{MCS}$ corresponding to the downlink data B, and an $I_{MCS}$ corresponding to the downlink data Dare 6. An $I_{MCS}$ corresponding to the downlink data B is 5. The $I_{MCS}$ corresponding to the downlink data A, the $I_{MCS}$ corresponding to the downlink data B, and the $I_{MCS}$ corresponding to the downlink data D are larger than the $I_{MCS}$ corresponding to the downlink data B. In this case, the terminal device can determine, based on the preset transmission condition, that first information corresponding to the downlink data A, first information corresponding to the downlink data B, and first information corresponding to the downlink data D are pieces of candidate first information.

Further, it is assumed that preset priorities indicated by a preset priority rule, priorities specified in a protocol, or priorities indicated by a network are low priorities, priorities of the first information corresponding to the downlink data A and the first information corresponding to the downlink data B are low priorities, and a priority of the first information corresponding to the downlink data D is a high priority. In this case, the terminal device may further determine, according to the preset priority rule, that the N pieces of first information include the first information corresponding to the downlink data A and the first information corresponding to the downlink data B. In this case, the terminal device may report, to the network device, second information obtained by parsing the downlink data A and the downlink data B.

In the foregoing example, the terminal device determines the N pieces of first information according to the preset priority rule after determining the plurality of pieces of candidate first information based on the preset transmission condition. In this embodiment of this application, when determining the plurality of pieces of candidate first information based on the preset transmission condition, the terminal device may actually further determine the N pieces of first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

Optionally, if the terminal device fails to decode downlink data corresponding to an $x^{th}$ piece of first information in the N pieces of first information, or the terminal device fails to obtain an MCS index of the downlink data corresponding to the $x^{th}$ piece of first information in the N pieces of first information, the second information reported by the terminal device is in a third state. The third state indicates that the terminal device fails to decode corresponding downlink data, or indicates that the terminal device fails to obtain an MCS index of corresponding downlink data.

Optionally, first information in the third state may be represented by parsing failure indication information (for example, "00").

Manner 6: The terminal device determines N pieces of first information based on a preconfigured downlink scheduling period.

Optionally, downlink data that corresponds to the N pieces of first information that are determined by the terminal device based on the preconfigured downlink scheduling period satisfies the preconfigured downlink scheduling period (for example, T).

Optionally, the downlink data corresponding to the N pieces of first information that are determined by the terminal device based on the preconfigured downlink scheduling period is in a first slot (slot), and the first slot is determined based on the downlink scheduling period (for example, T).

Optionally, the downlink data corresponding to the N pieces of first information that are determined by the terminal device based on the preconfigured downlink scheduling period is in a second slot (slot), and the second slot is determined based on the downlink scheduling period (for example, T) and an offset (offset).

Optionally, a unit of the downlink scheduling period may be a slot or a symbol. For example, a unit of the downlink scheduling period is a slot. In this case, the downlink scheduling period T means that a period is T slots.

For example, it is assumed that slots (that is, first slots (slots)) determined by the terminal device based on the preconfigured downlink scheduling period T (for example, five slots) include a slot 2, a slot 7, a slot 12, and a slot 17 shown in FIG. 6B. In this case, the terminal device determines, based on the preconfigured downlink scheduling period, that the N pieces of first information include first information corresponding to downlink data scheduled in the slot 2, the slot 7, the slot 12, and the slot 17 shown in FIG. 6B; or the terminal device determines, based on the preconfigured downlink scheduling period, that the downlink data corresponding to the N pieces of first information is located in the slot 2, the slot 7, the slot 12, and/or the slot 17 shown in FIG. 6B.

For another example, it is assumed that second slots (slots) determined by the terminal device based on the preconfigured downlink scheduling period T (for example, five slots) and an offset (offset) that is 2 include a slot 2, a slot 7, a slot 12, and a slot 17 shown in FIG. 6B. In this case, the terminal device determines, based on the preconfigured downlink scheduling period (T) and the offset (offset), that the N pieces of first information include first information corresponding to downlink data scheduled in the slot 2, the slot 7, the slot 12, and the slot 17 shown in FIG. 6B; or the terminal device determines, based on the preconfigured downlink scheduling period and the offset, that the downlink data corresponding to the N pieces of first information is located in the slot 2, the slot 7, the slot 12, and/or the slot 17 shown in FIG. 6B.

For example, it is assumed that the preconfigured downlink scheduling period is T, the first information set includes five pieces of first information, and the five pieces of first information respectively correspond to received downlink data A, downlink data B, downlink data C, downlink data D, and downlink data E, where the downlink data A, the downlink data C, and the downlink data E satisfy the downlink scheduling period T, and the downlink data B and the downlink data D do not satisfy the downlink scheduling period T. In this case, the terminal device may determine, based on the preconfigured downlink scheduling period, that the N pieces of first information include first information corresponding to the downlink data A, first information corresponding to the downlink data C, and first information corresponding to the downlink data E. In this case, the terminal device may report, to the network device, second information obtained by parsing the downlink data A, the downlink data C, and the downlink data E.

For another example, it is assumed that the preconfigured downlink scheduling period is five slots, and a slot determined based on the period of five slots is a slot 5. The first information set includes five pieces of first information, and the five pieces of first information respectively correspond to received downlink data A, downlink data B, downlink data C, downlink data D, and downlink data E. The downlink data A and the downlink data B are located in the slot 1. The downlink data C and the downlink data D are located in the slot 5. The downlink data E is located in the slot 8. In this case, the terminal device may determine, based on the preconfigured downlink scheduling period, that the N pieces of first information include first information corresponding to the downlink data C and first information corresponding to the downlink data D.

In some examples, the terminal device may alternatively first determine a plurality of pieces of candidate first information according to the preconfigured downlink scheduling period, and further determine the N pieces of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the preconfigured downlink scheduling period is T, the first information set includes five pieces of first information, and the five pieces of first information respectively correspond to received downlink data A, downlink data B, downlink data C, downlink data D, and downlink data E, where the downlink data A, the downlink data C, and the downlink data E satisfy the downlink scheduling period T, and the downlink data B and the downlink data D do not satisfy the downlink scheduling period T. In this case, the terminal device can determine, based on the preconfigured downlink scheduling period, that first information corresponding to the downlink data A, first information corresponding to the downlink data C, and first information corresponding to the downlink data E are pieces of candidate first information.

Further, it is assumed that DCI indication information corresponding to the downlink data C and DCI indication information corresponding to the downlink data E indicate to report second information corresponding to the downlink data, and DCI indication information corresponding to the downlink data A indicates the terminal device to report second information obtained by parsing the corresponding downlink data. In this case, the terminal device can further determine, based on the DCI indication information, that the N pieces of first information include the first information corresponding to the downlink data C and the first information corresponding to the downlink data E. In this case, the terminal device may report, to the network device, second information obtained by parsing the downlink data C and the downlink data E.

In the foregoing example, the terminal device determines the N pieces of first information based on the DCI indication information after determining the plurality of pieces of candidate first information based on the preconfigured downlink scheduling period. In this embodiment of this application, when determining the plurality of pieces of candidate first information based on the preconfigured downlink scheduling period, the terminal device may actually further determine the N pieces of first information based on one or more of the following: self-implementation, a protocol rule, a predefined rule, network indication information, a preset scheduling rule, a preset priority rule, a preset transmission condition, time domain resource information, a communication protocol, or the like.

Manner 7: The terminal device determines N pieces of first information based on time domain resource information.

Optionally, downlink data corresponding to the N pieces of first information that are determined by the terminal device is scheduled by using a preset time domain resource.

Optionally, the time domain resource information may be time domain resource indication information. The time domain resource indication information may include a mapping type, K0, S, and L; or the time domain resource indication information may include a mapping type, K0, and an SLIV. Optionally, the preset time domain resource may satisfy preset S and preset L, or the preset time domain resource may satisfy a preset SLIV.

Optionally, the downlink data corresponding to the N pieces of first information that are determined by the terminal device based on the time domain resource information is scheduled by using a time domain resource that satisfies preset S and preset L. Optionally, the downlink data corresponding to the N pieces of first information that are determined by the terminal device based on the time domain resource information is scheduled by using a time domain resource that satisfies the preset SLIV

Optionally, the terminal device determines a first time domain resource by using second indication information. There is an association relationship between the first time domain resource and the N pieces of first information.

Optionally, the terminal device determines the N pieces of first information based on the first time domain resource.

Optionally, the terminal device determines a first time domain resource by using second indication information. A time domain resource corresponding to fourth downlink data is the first time domain resource. The N pieces of first information include first information corresponding to the fourth downlink data.

Optionally, the second indication information indicates S and L, or indicates an SLIV, so that the terminal device determines the first time domain resource based on the S and the L, or based on the SLIV

For example, the first information set includes five pieces of first information, respectively corresponding to downlink data A, downlink data B, downlink data C, downlink data D, and downlink data E. If a time domain resource that carries the downlink data A and the downlink data B is a first time domain resource, the terminal device determines, based on the time domain resource information, that the N pieces of first information include first information corresponding to the downlink data A and first information corresponding to the downlink data B.

In some examples, the terminal device may alternatively first determine a plurality of pieces of candidate first information based on the time domain resource information, and further determine the N pieces of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

Case 3: M≥2, and N= 1.

In other words, the first information set includes M pieces of first information, and the second information is obtained by the terminal device based on downlink data corresponding to one piece (for example, a $K^{th}$ piece) of first information in the M pieces of first information in the first information set. In this solution, the terminal device obtains the second information based on only the downlink data corresponding to the one piece of first information. Therefore, feedback overheads can be reduced.

In Case 3, if the terminal device receives downlink data A, downlink data B, and downlink data C in step S501, the first information set includes three pieces of first information, where the three pieces of first information respectively indicate whether the terminal device successfully parses the downlink data A, the downlink data B, and the downlink data C. Further, the terminal device parses downlink data corresponding to one piece of first information in the three pieces of first information in the first information set (for example, the downlink data A, the downlink data B, or the downlink data C), to obtain the second information.

In embodiments of this application, the terminal device may determine one piece of first information from the M pieces of first information based on one or more of the following: a predefined rule, network indication information, a preset scheduling rule, a preset priority rule, a preset transmission condition, a preconfigured downlink scheduling period, time domain resource information, or a communication protocol.

Optionally, the one piece of first information is the $K^{th}$ piece of first information in the M pieces of first information in the first information set.

The following uses Manner a to Manner g as an example to specifically describe several policies and methods for determining the $K^{th}$ piece of first information in the first information set.

Manner a: The terminal device determines the $K^{th}$ piece of first information according to a predefined rule.

Optionally, the predefined rule may be preconfigured in the terminal device by the network device, or determined by the terminal device based on self-implementation, or predefined in a protocol, or configured by the network device. This is not limited in this embodiment of this application.

In some examples, the predefined rule may specify that the second information is obtained by parsing downlink data corresponding to the $K^{th}$ piece of first information in the first information set, or the $K^{th}$ piece of first information is determined according to the predefined rule.

For example, it is assumed that the first information set includes M pieces of first information (respectively, a first piece of first information, a second piece of first information, ..., an $i^{th}$ piece of first information, or a $M^{th}$ piece of first information), where $i \in (3, M-1)$; and the predefined rule specifies that the terminal device sends, to the network device, second information obtained by parsing downlink data corresponding to the last piece (that is, the $M^{th}$ piece) of first information in the first information set. In this case, the terminal device can determine, according to the predefined rule, that the foregoing $K^{th}$ piece of first information is the last piece (that is, the $M^{th}$ piece) of first information in the first information set, in other words, K is equal to M. In this case, the terminal device may report, to the network device, the second information obtained by parsing the downlink data corresponding to the last piece (that is, the $M^{th}$ piece) of first information in the first information set.

For another example, it is assumed that the first information set includes M pieces of first information (respectively, a first piece of first information, a second piece of first information, ..., an $i^{th}$ piece of first information, or a $M^{th}$ piece of first information), where $i \in (3, M-1)$; and the predefined rule specifies that the terminal device sends, to the network device, second information obtained by parsing downlink data corresponding to the first piece of first information in the first information set. In this case, the terminal device can determine, according to the predefined rule, that the foregoing $K^{th}$ piece of first information is the first piece of first information in the first information set, that is, K is 1. In this case, the terminal device may report, to the network device, the second information obtained by parsing the downlink data corresponding to the first piece of first information in the first information set.

In some other examples, the predefined rule may specify that the terminal device determines the foregoing $K^{th}$ piece of first information based on one or more of the following: network indication information, a preset scheduling rule, a preset priority rule, a preset transmission condition, a preconfigured downlink scheduling period, a time domain resource information, a communication protocol, or the like. For a specific method implemented based on the network indication information, the preset scheduling rule, the preset priority rule, the preset transmission condition, the preconfigured downlink scheduling period, the time domain resource information, and the communication protocol, refer to descriptions of the following Manner b to Manner g.

In some other examples, the terminal device may alternatively first determine a plurality of pieces of candidate first information according to a predefined rule, and further determine the foregoing $K^{th}$ piece of first information from the plurality of pieces of candidate first information based on one or more of the following: self-implementation, a protocol rule, network indication information, a preset scheduling rule, a preset priority rule, a preset transmission condition, a preconfigured downlink scheduling period, time domain resource information, a communication protocol, or the like.

Manner b: The terminal device determines the $K^{th}$ piece of first information based on network indication information.

In some examples, the network indication information may indicate the terminal device to send, to the network device, second information obtained by parsing downlink data corresponding to the N pieces of first information in the first information set.

Optionally, K is indicated by the network device. In this example, the network device indicates, by using the network indication information, the $K^{th}$ piece of first information corresponding to the second information fed back by the terminal device. For example, the network device may indicate, based on a current service requirement, the terminal device to report the second information, so that the second information fed back by the terminal device is more effectively applied to communication link adjustment.

For another example, it is assumed that the first information set includes M pieces of first information (respectively, a first piece of first information, a second piece of first information, ..., an $i^{th}$ piece of first information, or a $M^{th}$ piece of first information), where $i \in (3, M-1)$; and the network indication information indicates the terminal device to send, to the network device, second information obtained by parsing downlink data corresponding to the first piece of first information in the first information set. In this case, the terminal device can determine, based on the network indication information, that the foregoing $K^{th}$ piece of first information is the first piece of first information in the first information set, that is, K is 1. In this case, the terminal device may report, to the network device, the second information obtained by parsing the downlink data corresponding to the first piece of first information in the first information set.

For another example, it is assumed that the first information set includes M pieces of first information (respectively, a first piece of first information, a second piece of first information, ..., an $i^{th}$ piece of first information, or a $M^{th}$ piece of first information), where $i \in (3, M-1)$; and the network indication information indicates the terminal device to send, to the network device, second information obtained by parsing downlink data corresponding to the first piece of first information in the first information set. In this case, the terminal device can determine, based on the network indication information, that the foregoing $K^{th}$ piece of first information is the first piece of first information in the first information set, that is, K is 1. In this case, the terminal device may report, to the network device, the second information obtained by parsing the downlink data corresponding to the first piece of first information in the first information set.

In some other examples, the network indication information may indicate the terminal device to determine the foregoing K$^{th}$ piece of first information based on one or more of the following: a predefined rule, a preset scheduling rule, a preset priority rule, a preset transmission condition, a preconfigured downlink scheduling period, time domain resource information, a communication protocol, or the like. For a specific method implemented based on the network indication information, the preset scheduling rule, the preset priority rule, the preset transmission condition, the preconfigured downlink scheduling period, the time domain resource information, and the communication protocol, refer to descriptions of the following Manner c to Manner g.

In some embodiments, the network indication information may be DCI indication information.

The DCI indication information is used by the terminal device to determine the foregoing K$^{th}$ piece of first information, or the K$^{th}$ piece of first information is determined based on the DCI indication information.

In some other examples, the terminal device may alternatively first determine a plurality of pieces of candidate first information based on the network indication information (for example, the DCI indication information), and further determine the foregoing K$^{th}$ piece of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, the first information set includes M pieces of first information. At least one piece of first information in the M pieces of first information corresponds to at least one piece of downlink data. In DCI indication information corresponding to the at least one piece of downlink data, if y pieces of DCI indication information indicate the terminal device to report second information obtained by parsing corresponding downlink data, the terminal device can determine the foregoing K$^{th}$ piece of first information from y pieces of first information based on one or more of the following: self-implementation, a predefined rule, a protocol rule, network indication information, a preset scheduling rule, a preset priority rule, a preset transmission condition, a preconfigured downlink scheduling period, a time domain resource information, a communication protocol, or the like.

Optionally, the first information set includes at least two pieces of first information, and the at least two pieces of first information include first information A and first information B. The first information A corresponds to fifth downlink data, and the first information B corresponds to sixth downlink data. The fifth downlink data corresponds to a first DCI, and the sixth downlink data corresponds to a second DCI. If the first DCI indicates to determine the second information based on the fifth downlink data, and the second DCI indicates to determine the second information based on the sixth downlink data, the second information is determined based on the sixth downlink data. A position of the first information A in the first information set is before a position of the first information B in the first information set. The K$^{th}$ piece of first information is the first information B.

For example, the first information set includes three pieces of first information: first information A, first information B, and first information C. Positions of the three pieces of first information in the first information set are as follows. The first information A is in the front, the first information B follows the first information A, and the first information C follows the first information B. The first information A corresponds to downlink data 1, the first information B corresponds to downlink data 2, and the first information C corresponds to downlink data 3. The first information A corresponds to a DCI 1, the first information B corresponds to a DCI 2, and the first information C corresponds to a DCI 3. If the DCI 1 indicates that the second information is determined based on the downlink data 1, and the DCI 2 indicates that the second information is determined based on the downlink data 2, the second information is determined based on the downlink data 2. The K$^{th}$ piece of first information is the first information B.

Optionally, the foregoing K$^{th}$ piece of first information determined by the terminal device is an x$^{th}$ piece of first information in the y pieces of first information, where x E (1, y). In other words, the foregoing K$^{th}$ piece of first information determined by the terminal device is a first piece of first information, a second piece of first information, ..., an i$^{th}$ piece of first information, or a y$^{th}$ piece of first information.

For example, it is assumed that the first information set includes three pieces of first information, and the three pieces of first information respectively correspond to received downlink data A, downlink data B, and downlink data C. DCI indication information corresponding to the downlink data A and DCI indication information corresponding to the downlink data C indicate the terminal device to report second information obtained by parsing the corresponding downlink data. In this case, the terminal device can determine that first information corresponding to the downlink data A and first information corresponding to the downlink data C are pieces of candidate first information. Further, it is assumed that the network indication information indicates the terminal device to send, to the network device, second information obtained by parsing downlink data corresponding to the last piece of first information in the determined pieces of candidate first information. In this case, the terminal device can determine that the foregoing K$^{th}$ piece of first information is the first information corresponding to the downlink data C. In this case, the terminal device may report, to the network device, second information obtained by parsing the downlink data C.

In some other examples, when DCI indication information corresponding to an $x^{th}$ piece of first information in the first information set indicates the terminal device to report second information obtained by parsing corresponding downlink data, the terminal device can determine that the foregoing $K^{th}$ piece of first information is the $x^{th}$ piece of first information. In this case, the terminal device reports second information obtained by parsing downlink data corresponding to the $x^{th}$ piece of first information. When the DCI indication information corresponding to the $x^{th}$ piece of first information in the first information set indicates the terminal device not to report the second information obtained by parsing the corresponding downlink data, the terminal device does not report the second information.

In this case, $x \in (1, M)$, that is, the $x^{th}$ piece of first information may be a first piece of first information, a second piece of first information, ..., an $i^{th}$ piece of first information, or a $M^{th}$ piece of first information. An example in which x equals M (namely, the last piece of first information in the first information set) is used. If DCI indication information corresponding to the last piece of first information in the first information set indicates the terminal device to report second information obtained by parsing corresponding downlink data, the terminal device reports the second information obtained based on a result of parsing the downlink data corresponding to the last piece of first information. If the DCI indication information corresponding to the last piece of first information in the first information set indicates the terminal device not to report the second information obtained by parsing the corresponding downlink data, the terminal device does not report the second information.

Optionally, the second information is determined by using a DCI corresponding to the last piece of first information in the first information set, or the second information is determined by using downlink data corresponding to the last piece of first information in the first information set.

Optionally, if the terminal device does not receive the downlink data used to determine the second information, or decoding of the downlink data fails, the terminal device does not feed back the second information, or the second information is in a fourth state. The fourth state indicates that the terminal device does not receive downlink data corresponding to second information.

It should be noted that, in this embodiment of this application, if the terminal device does not receive the downlink data corresponding to the $x^{th}$ piece of first information, or the terminal device does not receive the DCI indication information corresponding to the $x^{th}$ piece of first information, the terminal device does not report the corresponding second information. For example, if the terminal device does not receive a specific piece of downlink data, the terminal device may also send corresponding first information to the network device. For example, if the terminal device does not receive an $x^{th}$ piece of downlink data, the terminal device may alternatively use parsing failure indication information (for example, "0", "N" or "00") as first information corresponding to the $x^{th}$ piece of downlink data. In this case, the terminal device does not report the corresponding second information. In this case, when the terminal device does not report the second information, overheads of reporting the second information by the terminal device can be saved.

Optionally, the second information reported by the terminal device is in a second state if the terminal device does not receive the downlink data corresponding to the $x^{th}$ piece of first information, or the terminal device does not receive the DCI indication information corresponding to the $x^{th}$ piece of first information, or the DCI information corresponding to the $x^{th}$ piece of first information does not indicate the terminal device to report the second information. The second state indicates that the terminal device does not receive corresponding downlink data, or indicates that the terminal device does not receive corresponding DCI indication information, or indicates that a DCI of corresponding downlink data does not indicate the terminal device to report second information.

Manner c: The terminal device determines the $K^{th}$ piece of first information according to a preset scheduling rule.

Optionally, downlink data corresponding to the $K^{th}$ piece of first information determined by the terminal device according to the preset scheduling rule is scheduled in a preset data scheduling manner.

Optionally, the preset scheduling rule indicates that the downlink data corresponding to the $K^{th}$ piece of first information is scheduled in the preset data scheduling manner.

For example, the preset data scheduling manner may include but is not limited to semi-persistent scheduling and dynamic scheduling.

Optionally, the downlink data corresponding to the $K^{th}$ piece of first information that is determined by the terminal device according to the preset scheduling rule is dynamically scheduled or semi-persistently scheduled.

Optionally, the preset scheduling rule indicates that the downlink data corresponding to the $K^{th}$ piece of first information is semi-persistently scheduled, or the preset scheduling rule indicates that the downlink data corresponding to the $K^{th}$ piece of first information is dynamically scheduled.

For example, it is assumed that the preset data scheduling manner is dynamic scheduling, the first information set includes three pieces of first information, and the three pieces of first information respectively correspond to received downlink data A, downlink data B, and downlink data C. If the downlink data A and the downlink data B are semi-persistently scheduled, and the downlink data C is dynamically scheduled, the terminal device can determine, according to the preset scheduling rule, that the $K^{th}$ piece of first information is first information corresponding to the downlink data C. In this case, the terminal device may report, to the network device, second information obtained by parsing the downlink data C.

In some examples, the terminal device determines a plurality of pieces of candidate first information according to the preset scheduling rule, and further determines the foregoing $K^{th}$ piece of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the preset data scheduling manner is dynamic scheduling, the first information set includes three pieces of first information, and the three pieces of first information respectively correspond to received downlink data A, downlink data B, and downlink data C. If the downlink data A is semi-persistently scheduled, and the downlink data B and the downlink data C are dynamically scheduled, the terminal device can determine, according to the preset scheduling rule, that first information corresponding to the downlink data B and first information corresponding to the downlink data C are pieces of candidate first information.

Further, it is assumed that the predefined rule specifies that the terminal device sends, to the network device, second information obtained by parsing downlink data corresponding to the last piece of determined candidate first information. In this case, the terminal device may further determine, according to the predefined rule, that the $K^{th}$ piece of first information is the first information corresponding to the downlink data C. In this case, the terminal device may report, to the network device, second information obtained by parsing the downlink data C.

Manner d: The terminal device determines the $K^{th}$ piece of first information according to a preset priority rule.

Optionally, a priority of the $K^{th}$ piece of first information that is determined by the terminal device according to the preset priority rule is a priority specified in a protocol, a preset priority, or a priority indicated by a network.

Optionally, the preset priority rule indicates that the priority corresponding to the $K^{th}$ piece of first information is a priority specified in a protocol, a preset priority, or a priority indicated by a network.

The preset priority, the priority specified in a protocol, or the priority indicated by a network may include but is not limited to a priority of any category corresponding to the M pieces of first information in the first information set. For example, the priority may be a high priority, or the priority may be a low priority.

The priority indicated by a network may be a priority indicated by the network device, for example, a priority indicated by the network device with indication information.

For example, it is assumed that priority categories corresponding to the M pieces of first information in the first information set include a high priority, a low priority, and a medium priority. In this case, the preset priority may include a high priority, a low priority, or a medium priority.

For example, the preset priority, the priority specified in a protocol, or the priority indicated by a network is a high priority. Optionally, the priority of the foregoing $K^{th}$ piece of first information that is determined by the terminal device according to the preset priority rule is a high priority. Optionally, the preset priority rule indicates that the priority corresponding to the $K^{th}$ piece of first information is a high priority.

For another example, the preset priority, the priority specified in a protocol, or the priority indicated by a network is a medium priority. Optionally, the priority of the foregoing $K^{th}$ piece of first information that is determined by the terminal device according to the preset priority rule is a medium priority. Optionally, the preset priority rule indicates that the priority of the $K^{th}$ piece of first information is a medium priority.

For another example, the preset priority, the priority specified in a protocol, or the priority indicated by a network is a low priority. Optionally, the priority of the foregoing $K^{th}$ piece of first information determined by the terminal device according to the preset priority rule is a low priority. Optionally, the preset priority rule indicates that the priority of the $K^{th}$ piece of first information is a low priority.

Optionally, the priority indicated by a network may include but is not limited to a priority indicated by using DCI indication information or a priority indicated by using upper layer signaling configuration information.

The preset priority rule may be determined by the terminal device based on self-implementation, or may be determined by the terminal device based on a predefined rule, a protocol rule, network indication information, or the like. This is not limited in this application.

For example, it is assumed that the preset priority, the priority specified in a protocol, or the priority indicated by a network is a high priority, the first information set includes three pieces of first information, and the three pieces of first information respectively correspond to received downlink data A, downlink data B, and downlink data C. A priority of first information corresponding to the downlink data A is a high priority, and priorities of first information corresponding to the downlink data B and first information corresponding to the downlink data C are low priorities. In this case, the terminal device can determine, according to the preset priority rule, that the $K^{th}$ piece of first information is the first information corresponding to the downlink data A. In this case, the terminal device may report, to the network device, second information obtained by parsing the downlink data A.

For example, it is assumed that the first information set includes two pieces of first information, and the two pieces of first information respectively correspond to received downlink data A and downlink data B. A priority of first information corresponding to the downlink data A is a high priority. A priority of first information corresponding to the downlink data B is a low priority. In some examples, the terminal device can determine, according to the preset priority rule, that the priority of the K$^{th}$ piece of first information is a high priority. In this case, the K$^{th}$ piece of first information is the first information corresponding to the downlink data A. Further, the terminal device may determine second information based on the downlink data A. Further, the terminal device may report, to the network device, the second information obtained by parsing the downlink data A. Alternatively, in some other examples, the terminal device can determine, according to the preset priority rule, that the priority of the K$^{th}$ piece of first information is a low priority. In this case, the K$^{th}$ piece of first information is the first information corresponding to the downlink data B. Further, the terminal device may determine second information based on the downlink data B. Further, the terminal device may report, to the network device, the second information obtained by parsing the downlink data B.

In some examples, the terminal device determines a plurality of pieces of candidate first information according to the preset priority rule, and further determines the foregoing K$^{th}$ piece of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the preset priority, the priority specified in a protocol, or the priority indicated by a network is a low priority, the first information set includes three pieces of first information, and the three pieces of first information respectively correspond to received downlink data A, downlink data B, and downlink data C. A priority of first information corresponding to the downlink data A is a high priority, and priorities of first information corresponding to the downlink data B and first information corresponding to the downlink data C are low priorities. In this case, the terminal device may determine, according to the preset priority rule, that the first information corresponding to the downlink data B and the first information corresponding to the downlink data C are pieces of candidate first information.

Further, if a preset data scheduling manner specified by the preset scheduling rule is dynamic scheduling, the downlink data B is semi-persistently scheduled, and the downlink data C is dynamically scheduled, the terminal device can determine, according to the preset scheduling rule, that K$^{th}$ piece of first information is the first information corresponding to the downlink data C. In this case, the terminal device may report, to the network device, second information obtained by parsing the downlink data C.

Optionally, in the M pieces of first information included in the first information set, at least one piece of first information is of high priority, and at least one piece of first information is of low priority.

Manner e: The terminal device determines the K$^{th}$ piece of first information based on a preset transmission condition.

In some embodiments, downlink data corresponding to the K$^{th}$ piece of first information that is determined by the terminal device based on the preset transmission condition satisfies the preset transmission manner.

In some embodiments, the preset transmission condition is used to determine that the downlink data corresponding to the K$^{th}$ piece of first information satisfies the preset transmission manner.

For example, the preset transmission manner may include but is not limited to initial transmission or retransmission.

Optionally, the downlink data corresponding to the K$^{th}$ piece of first information that is determined by the terminal device based on the preset transmission condition is initially transmitted or retransmitted.

Optionally, the preset transmission condition may be determined by the terminal device based on self-implementation, or may be determined by the terminal device based on a predefined rule, a protocol rule, network indication information, or the like. This is not limited in this application.

For example, it is assumed that the preset transmission manner is retransmission, the first information set includes three pieces of first information, and the three pieces of first information respectively correspond to received downlink data A, downlink data B, and downlink data C. The downlink data A and the downlink data C are initially transmitted data, and the downlink data B are retransmitted data. In this case, the terminal device can determine, based on the preset transmission condition, that the K$^{th}$ piece of first information is the first information corresponding to the downlink data B. In this case, the terminal device may report, to the network device, second information obtained by parsing the downlink data B.

In some examples, the terminal device may alternatively first determine a plurality of pieces of candidate first information based on the preset transmission condition, and further determine the K$^{th}$ piece of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the preset transmission manner is retransmission, the first information set includes five pieces of first information, and the five pieces of first information respectively correspond to received downlink data A, downlink data B, downlink data C, downlink data D, and downlink data E, where the downlink data A, the downlink data C, and the downlink data E are initially transmitted data, and the downlink data B and the downlink data D are retransmitted data. In this case, the terminal device can determine, based on the preset transmission condition, that first information corresponding to the downlink data B and first information corresponding to the downlink data D are pieces of candidate first information.

Further, if the preset data scheduling manner is dynamic scheduling, the downlink data B is semi-persistently scheduled, and the downlink data D is dynamically scheduled, the terminal device can determine, according to the preset scheduling rule, that $K^{th}$ piece of first information is the first information corresponding to the downlink data D. In this case, the terminal device may report, to the network device, second information obtained by parsing the downlink data D.

In the foregoing example, the terminal device determines the $K^{th}$ piece of first information according to the preset scheduling rule after determining the plurality of pieces of candidate first information based on the preset transmission condition. In this embodiment of this application, when determining the plurality of pieces of candidate first information based on the preset transmission condition, the terminal device may actually further determine the $K^{th}$ piece of first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

In some other embodiments, MCS indication information (for example, $I_{MCS}$) corresponding to the downlink data that corresponds to the $K^{th}$ piece of first information is greater than a preset threshold, where the $K^{th}$ piece of first information is determined by the terminal device based on the preset transmission condition.

Optionally, the preset transmission condition is used to determine that the downlink data corresponding to the $K^{th}$ piece of first information is eighth downlink data. The eighth downlink data is downlink data with a largest MCS index in downlink data corresponding to M pieces of first information in the first information set. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 6, and an MCS index of the downlink data C is 7. In this case, the $K^{th}$ piece of first information is first information corresponding to the downlink data C.

Optionally, the preset transmission condition is used to determine that the downlink data corresponding to the $K^{th}$ piece of first information is ninth downlink data. The ninth downlink data is downlink data that has a largest MCS index in downlink data corresponding to M pieces of first information in the first information set and that corresponds to the last piece of first information in a plurality of first information corresponding to a same MCS index. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 6, and an MCS index of the downlink data C is 6. In this case, the $K^{th}$ piece of first information is first information corresponding to the downlink data C.

Optionally, the preset transmission condition is used to determine that the downlink data corresponding to the $K^{th}$ piece of first information is tenth downlink data. The tenth downlink data is downlink data that has a largest MCS index in downlink data corresponding to M pieces of first information in the first information set and that corresponds to the first piece of first information in a plurality of first information corresponding to a same MCS index. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 6, and an MCS index of the downlink data C is 6. In this case, the $K^{th}$ piece of first information is first information corresponding to the downlink data B.

Optionally, the preset transmission condition is used to determine that the downlink data corresponding to the $K^{th}$ piece of first information is eleventh downlink data. The eleventh downlink data is downlink data with a minimum MCS index in the downlink data corresponding to the M pieces of first information in the first information set. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 6, and an MCS index of the downlink data C is 7. In this case, the $K^{th}$ piece of first information is first information corresponding to the downlink data A.

Optionally, the preset transmission condition is used to determine that the downlink data corresponding to the $K^{th}$ piece of first information is twelfth downlink data. The twelfth downlink data is downlink data that has a smallest MCS index in downlink data corresponding to M pieces of first information in the first information set and that corresponds to the last piece of first information in a plurality of first information corresponding to a same MCS index. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 5, and an MCS index of the downlink data C is 6. In this case, the K$^{th}$ piece of first information is first information corresponding to the downlink data B.

Optionally, the preset transmission condition is used to determine that the downlink data corresponding to the K$^{th}$ piece of first information is thirteenth downlink data. The thirteenth downlink data is downlink data that has a smallest MCS index in downlink data corresponding to M pieces of first information in the first information set and that corresponds to the first piece of first information in a plurality of first information corresponding to a same MCS index. For example, M is 3, that is, the first information set includes three pieces of first information, and each piece of first information corresponds to one piece of downlink data. In this case, the three pieces of first information correspond to downlink data A, downlink data B, and downlink data C. An MCS index of the downlink data A is 5, an MCS index of the downlink data B is 5, and an MCS index of the downlink data C is 6. In this case, the K$^{th}$ piece of first information is first information corresponding to the downlink data A.

It should be further noted that in the foregoing examples, "the first piece of first information" and "the last piece of first information" describe a position of the first information in the first information set. For example, the first information set includes five pieces of first information, namely, first information A, first information B, first information C, first information D, and first information E. In this case, the first information A is the first piece of first information, and the first information E is the last piece of first information.

It should be noted that, for determining the K$^{th}$ piece of first information, MCS indication information that is based on different MCS parameter configuration tables can be determined with the MCS parameter configuration table being a unit. For example, a specific MCS parameter configuration table used for determining the K$^{th}$ piece of first information may be determined based on self-implementation, a protocol rule, a predefined rule, network indication information, a protocol specification, or the like.

It is assumed that the downlink data corresponding to the M pieces of first information in the first information set at least includes downlink data A and downlink data B, an MCS parameter configuration table corresponding to the downlink data A is an MCS table 1, and an MCS parameter configuration table corresponding to the downlink data B is an MCS table 2. It should be noted that, in this case, it can be determined, based on the preset transmission condition, that the downlink data corresponding to the K$^{th}$ piece of first information is fourteenth downlink data. If the preset transmission condition indicates that an MCS parameter configuration table corresponding to the fourteenth downlink data is the MCS table 1, the fourteenth downlink data is downlink data A; or if the preset transmission condition indicates that the MCS parameter configuration table corresponding to the fourteenth downlink data is the MCS table 2, the fourteenth downlink data is the downlink data B.

In some examples, the terminal device may alternatively first determine a plurality of pieces of candidate first information based on the MCS indication information (for example, I$_{MCS}$), and further determine the foregoing K$^{th}$ piece of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the first information set includes three pieces of first information, and the three pieces of first information respectively correspond to received downlink data A, downlink data B, and downlink data C. An I$_{MCS}$ corresponding to the downlink data A and an I$_{MCS}$ corresponding to the downlink data B are 6, and an I$_{MCS}$ corresponding to the downlink data C is 5. The I$_{MCS}$ corresponding to the downlink data A and the I$_{MCS}$ corresponding to the downlink data B are larger than the I$_{MCS}$ corresponding to the downlink data C. In this case, the terminal device can determine, based on the MCS indication information, that first information corresponding to the downlink data A and first information corresponding to the downlink data B are pieces of candidate first information. Further, the terminal device can determine the foregoing K$^{th}$ piece of first information from the pieces of candidate first information based on one or more of the following: self-implementation, a protocol rule, a predefined rule, network indication information, a preset scheduling rule, a preset priority rule, a preset transmission condition, a preconfigured downlink scheduling period, a time domain resource information, a communication protocol, or the like.

Optionally, if the terminal device fails to decode the downlink data corresponding to the K$^{th}$ piece of first information, or the terminal device fails to obtain an MCS index of the downlink data corresponding to the K$^{th}$ piece of first information, the second information reported by the terminal device is in the third state. The third state indicates that the terminal device fails to decode corresponding downlink data, or indicates that the terminal device fails to obtain an MCS index of corresponding downlink data.

Optionally, first information in the third state may be represented by parsing failure indication information (for example, "00").

Manner f: The terminal device determines the K$^{th}$ piece of first information based on a preconfigured downlink scheduling period.

Optionally, downlink data that corresponds to the K$^{th}$ piece of first information determined by the terminal device based on the preconfigured downlink scheduling period satisfies the preconfigured downlink scheduling period (for example, T).

Optionally, the downlink data corresponding to the K$^{th}$ piece of first information determined by the terminal device based on the preconfigured downlink scheduling period is in a first slot (slot), and the first slot is determined based on the downlink scheduling period (for example, T).

Optionally, the downlink data corresponding to the K$^{th}$ piece of first information determined by the terminal device based on the preconfigured downlink scheduling period is in a second slot (slot), and the second slot is determined based on the downlink scheduling period (for example, T) and an offset (offset).

Optionally, a unit of the downlink scheduling period may be a slot or a symbol. For example, a unit of the downlink scheduling period is a slot. In this case, the downlink scheduling period T means that a period is T slots.

For example, it is assumed that slots (that is, first slots (slots)) determined by the terminal device based on the preconfigured downlink scheduling period T (for example, five slots) include a slot 2, a slot 7, a slot 12, and a slot 17 shown in FIG. 6B. In this case, the terminal device determines, based on the preconfigured downlink scheduling period, that the K$^{th}$ piece of first information includes first information corresponding to downlink data scheduled in the slot 2, the slot 7, the slot 12, or the slot 17 shown in FIG. 6B; or the terminal device determines, based on the preconfigured downlink scheduling period, that the downlink data corresponding to the K$^{th}$ piece of first information is located in the slot 2, the slot 7, the slot 12, and/or the slot 17 shown in FIG. 6B.

For another example, it is assumed that second slots (slots) determined by the terminal device based on the preconfigured downlink scheduling period T (for example, five slots) and an offset (offset) that is 2 include a slot 2, a slot 7, a slot 12, and a slot 17 shown in FIG. 6B. In this case, the terminal device determines, based on the preconfigured downlink scheduling period (T) and the offset (offset), that the K$^{th}$ piece of first information includes first information corresponding to downlink data scheduled in the slot 2, the slot 7, the slot 12, and the slot 17 shown in FIG. 6B; or the terminal device determines, based on the preconfigured downlink scheduling period and the offset, that the downlink data corresponding to the K$^{th}$ piece of first information is located in the slot 2, the slot 7, the slot 12, and/or the slot 17 shown in FIG. 6B.

For example, it is assumed that the preconfigured downlink scheduling period is T, the first information set includes three pieces of first information, and the three pieces of first information respectively correspond to received downlink data A, downlink data B, and downlink data C, where the downlink data A satisfies the downlink scheduling period T, and the downlink data B and the downlink data C do not satisfy the downlink scheduling period T. In this case, the terminal device can determine, based on the preconfigured downlink scheduling period, that the K$^{th}$ piece of first information is first information corresponding to the downlink data A. In this case, the terminal device may report, to the network device, second information obtained by parsing the downlink data A.

For another example, it is assumed that the preconfigured downlink scheduling period is five slots, a slot determined based on the period of five slots is a slot 5, the first information set includes five pieces of first information, and the five pieces of first information respectively correspond to received downlink data A, downlink data B, downlink data C, downlink data D, and downlink data E, where the downlink data A and the downlink data B are located in a slot 1, the downlink data C is located in the slot 5, and the downlink data D and the downlink data E are located in a slot 8. In this case, the terminal device can determine, based on the preconfigured downlink scheduling period, that the K$^{th}$ piece of first information is first information corresponding to the downlink data C.

In some examples, the terminal device determines a plurality of pieces of candidate first information based on the preconfigured downlink scheduling period, and may further determine the foregoing K$^{th}$ piece of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

For example, it is assumed that the preconfigured downlink scheduling period is T, the first information set includes five pieces of first information, and the five pieces of first information respectively correspond to received downlink data A, downlink data B, downlink data C, downlink data D, and downlink data E, where the downlink data A, the downlink data C, and the downlink data E satisfy the downlink scheduling period T, and the downlink data B and the downlink data D do not satisfy the downlink scheduling period T. In this case, the terminal device can determine, based on the preconfigured downlink scheduling period, that first information corresponding to the downlink data A, first information corresponding to the downlink data C, and first information corresponding to the downlink data E are pieces of candidate first information.

Further, it is assumed that DCI indication information corresponding to the downlink data C and DCI indication information corresponding to the downlink data E indicate the terminal device not to report second information obtained by parsing the corresponding downlink data, and DCI indication information corresponding to the downlink data A indicates the terminal device to report second information obtained by parsing the corresponding downlink data. In this case, the terminal device can further determine, based on the DCI indication information, that the K$^{th}$ piece of first information includes the first information corresponding to the downlink data A. In this case, the terminal device may report, to the network device, the second information obtained by parsing the downlink data A.

In the foregoing example, the terminal device determines the K$^{th}$ piece of first information based on the DCI indication information after determining the plurality of pieces of candidate first information based on the preconfigured downlink scheduling period. In this embodiment of this application, when determining the plurality of pieces of candidate first information based on the preconfigured downlink scheduling period, the terminal device may actually further determine the K$^{th}$ piece of first information based on one or more of the following: self-implementation, a protocol rule, a predefined rule, network indication information, a preset scheduling rule, a preset priority rule, a preset transmission condition, time domain resource information, a communication protocol, or the like.

Manner g: The terminal device determines the K$^{th}$ piece of first information based on time domain resource information.

Optionally, downlink data corresponding to the K$^{th}$ piece of first information determined by the terminal device is scheduled by using a preset time domain resource.

Optionally, the downlink data corresponding to the K$^{th}$ piece of first information determined by the terminal device based on the time domain resource information is scheduled by using a time domain resource that satisfies preset S and preset L. Optionally, the downlink data corresponding to the K$^{th}$ piece of first information determined by the terminal device based on the time domain resource information is scheduled by using a time domain resource that satisfies a preset SLIV.

Optionally, the terminal device determines a second time domain resource by using third indication information. There is an association relationship between the second time domain resource and the K$^{th}$ piece of first information.

Optionally, the terminal device determines the K$^{th}$ piece of first information based on the second time domain resource.

Optionally, the terminal device determines the second time domain resource by using the third indication information. A time domain resource corresponding to fifteenth downlink data is the second time domain resource. In this case, the K$^{th}$ piece of first information is first information corresponding to the fifteenth downlink data.

Optionally, the third indication information indicates S and L, or indicates an SLIV, so that the terminal device determines the second time domain resource based on S and L, or based on the SLIV.

For example, the first information set includes five pieces of first information, respectively corresponding to downlink data A, downlink data B, downlink data C, downlink data D, and downlink data E. If a time domain resource that carries the downlink data A is the second time domain resource, the terminal device determines, based on the time domain resource information, that the N pieces of first information include first information corresponding to the downlink data A.

In some examples, the terminal device may alternatively first determine a plurality of pieces of candidate first information based on the time domain resource information, and further determine the K$^{th}$ piece of first information from the plurality of pieces of candidate first information based on one or more of the following: self-implementation, a protocol rule, a predefined rule, network indication information, a preset scheduling rule, a preset priority rule, a preset transmission condition, a preconfigured downlink scheduling period, time domain resource information, a communication protocol, or the like.

It should be noted that, for a case in which the terminal device feeds back the first information set in a manner of CBG feedback, that is, a case in which a plurality of pieces of first information in the first information set are used to indicate whether the terminal device successfully parses one piece of downlink data, second information sent by the terminal device to the network device also corresponds to downlink data in a same manner.

A correspondence between first information and downlink data in the first information set shown in FIG. 8 is used as an example. In the first information set, the first five bits indicate whether a CBG corresponding to downlink data A is decoded correctly or incorrectly, five bits in the middle indicate whether a CBG corresponding to downlink data B is decoded correctly or incorrectly, and the last five bits indicate whether a CBG corresponding to downlink data C is decoded correctly or incorrectly. When determining the second information, the terminal device also uses downlink data corresponding to the first five bits, downlink data corresponding to five bits in the middle, and downlink data corresponding to the last five bits in the first information set as a whole. Specifically, the terminal device may send one piece of second information to the network device, where the one piece of second information is information obtained by the terminal device by parsing the downlink data corresponding to the first five bits, the downlink data corresponding to the five bits in the middle, or the downlink data corresponding to the last five bits in the first information set. Alternatively, the terminal device may send two pieces of second information to the network device, where the two pieces of second information include any two pieces of information obtained by the terminal device by parsing the downlink data corresponding to the first five bits, information obtained by parsing the downlink data corresponding to five bits in the middle, or information obtained by parsing the downlink data corresponding to the last five bits in the first information set. Alternatively, the terminal device may send three pieces of second information to the network device, where the three pieces of second information are obtained by the terminal device by parsing the downlink data corresponding to the first five bits, the downlink data corresponding to the five bits in the middle, and the downlink data corresponding to the last five bits in the first information set.

It should be noted that Manner 1 to Manner 7 and Manner a to Manner g in embodiments of this application are merely examples of the policies and the methods for determining the N pieces of first information in the first information set. A specific policy and method are not limited in this application. For example, the terminal device may alternatively determine the N pieces of first information in the first information set based on self-implementation.

It may be understood that in the foregoing Case 1 (M=1, and N=1) in the embodiment of this application, because both the first information set and the second information are for one piece of downlink data sent by the network device to the terminal device, both the terminal device and the network device can learn of a specific piece of downlink data corresponding to the first information set and the second information. In the foregoing Case 2 (M≥2, and N≥2) in the embodiment of this application, N pieces of second information correspond to the N pieces of first information in the first information set, and the N pieces of first information in the first information set correspond to the downlink data. Therefore, the terminal device and the network device also can learn of a specific piece of downlink data corresponding to the first information set and the second information. In the foregoing Case 3 (M≥2, and N=1) in the embodiment of this application, the second information corresponds to one piece of first information in the first information set, and the one piece of first information in the first information set corresponds to the downlink data. Therefore, the terminal device and the network device also can learn of a specific piece of downlink data corresponding to the first information set and the second information. Therefore, based on the communication method provided in embodiments of this application, the network device can accurately perform adaptive adjustment on a downlink based on received first information set and/or received second information, to ensure reliability of next downlink transmission.

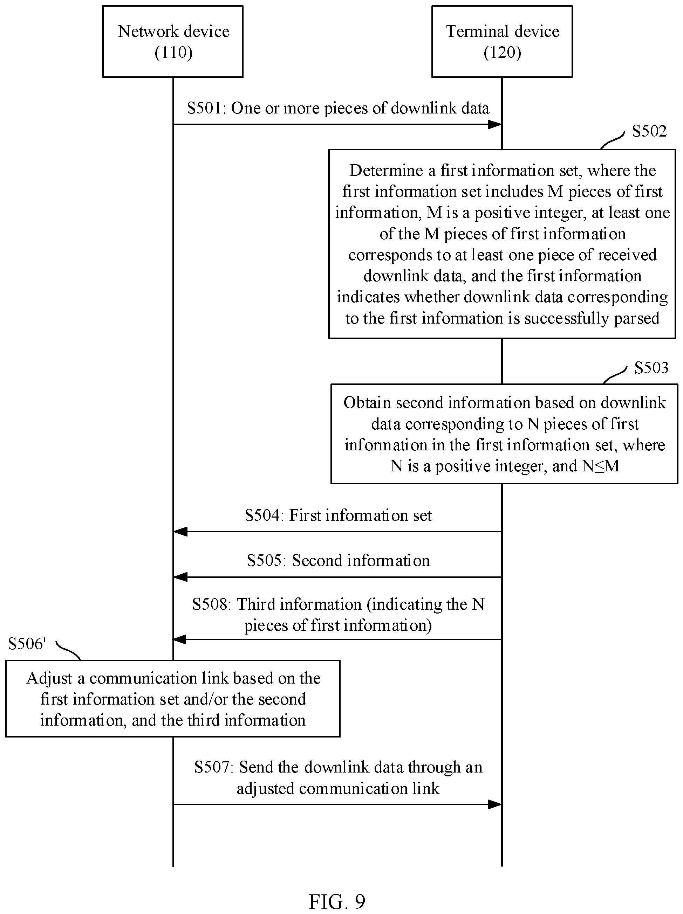

Further, in some embodiments, to further ensure accuracy of downlink adjustment performed by the network device, as shown in FIG. 9, the communication method provided in embodiments of this application further includes step S508.

S508: The terminal device sends third information to the network device, where the third information indicates the N pieces of first information.

For example, in the foregoing Case 2 (M≥2, and N≥2), the third information indicates the terminal device to determine the N pieces of first information from the M pieces of first information in the first information set. For example, in the foregoing Case 3 (M≥2, and N=1), the third information indicates the terminal device to determine the N pieces of first information from the M pieces of first information in the first information set.

Optionally, the third information indicates the terminal device to determine the $K^{th}$ piece of first information from the M pieces of first information in the first information set.

When step S508 is performed by the terminal device, step S506 may be replaced with step S506' shown in FIG. 9.

S506: The network device adjusts a communication link based on the third information and the first information set and/or the second information.

In step S508, it can be further ensured that the terminal device and the network device have a same understanding of the downlink data corresponding to the first information set and the second information, thereby avoiding impact on downlink adjustment caused by an incorrect understanding.

In addition, for a case in which the terminal device determines the N pieces of first information in the first information set based on self-implementation, the foregoing step S508 can ensure that the network device learns of a specific piece of downlink data corresponding to the first information set and the second information. This helps the network device accurately perform adaptive adjustment on a downlink based on the received first information set and/or second information, to ensure reliability of next downlink transmission.

According to the communication method corresponding to Case 1 (M=1, and N=1), Case 2 (M≥2, and N≥2), or Case 3 (M≥2, and N=1) provided in the embodiments of this application, after receiving the downlink data from the network device, in addition to feeding back information about whether M pieces of downlink data are successfully parsed (that is, the first information set), the terminal device may feed back, to the network device, information obtained by the terminal device by parsing N pieces of downlink data (that is, the second information), so that the network device can perform adaptive adjustment on a downlink based on the first information set and/or the second information, thereby ensuring reliability of next downlink transmission.

Further, according to the communication method corresponding to the foregoing case 3 (M≥2, and N=1) in the embodiment of this application, compared with the communication method corresponding to the foregoing case 2 (M≥2, and N≥2), because the terminal device sends, to the network device, only second information corresponding to one piece of first information (for example, the $K^{th}$ piece of first information) that is determined, it can be ensured that the network device can perform adaptive adjustment on a downlink based on the first information set and/or the second information while uplink transmission overheads of the terminal device are reduced.

It should be understood that the solutions in embodiments of this application may be appropriately combined, and for explanations or descriptions of terms in the embodiments, reference may be made to each other. This is not limited.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, to implement the functions in any of the foregoing embodiments, the terminal device or the network device includes corresponding hardware structures and/or software modules for performing the functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional module division may be performed on the terminal device or the network device. For example, functional modules may be divided based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used.

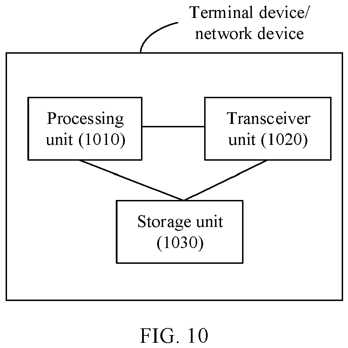

For example, in the case of functional module division being performed based on integration, FIG. 10 is a block diagram of a structure of a terminal device or a network device according to an embodiment of this application. As shown in the FIG. 10, the terminal device/network device may include a processing unit 1010 and a transceiver unit 1020.

Further, in a possible structure, as shown in FIG. 10, the terminal device/network device may further include a storage unit 1030.

When the block diagram of the structure in FIG. 10 is a block diagram of a structure of the terminal device, the processing unit 1010 is configured to support the terminal device in determining a first information set including M pieces of first information; and/or other processes for the techniques described herein. The transceiver unit 1020 is configured to support the terminal device in sending, to the network device, second information obtained by the terminal device based on downlink data corresponding to N pieces of first information in the first information set; sending, to the network device, third information indicating the N pieces of first information; and sending, to the network device, the first information set that includes the M pieces of first information; and/or other processes for the techniques described herein. The storage unit 1030 is configured to store a computer program and intermediate data in a process in which the terminal device performs the communication method provided in this application; and/or other data for the techniques described herein.

When the block diagram of the structure shown in FIG. 10 is a block diagram of a structure of the network device, the transceiver unit 1020 is configured to support the network device in sending downlink data to the terminal device; receive, from the terminal device, a first information set that includes M pieces of first information and second information obtained based on downlink data corresponding to N pieces of first information in the first information set; send DCI indication information to the terminal device; and/or other processes for the techniques described herein. The processing unit 1010 is configured to support the network device in performing communication link adjustment based on the first information set and/or the second information; and/or other processes for the techniques described herein. The storage unit 1030 is configured to store a computer program and intermediate data in a process in which the network device performs the communication method provided in this application; and/or other data for the techniques described herein.

It should be noted that the transceiver unit 1020 may include a radio frequency circuit. Specifically, the terminal device or the network device may receive and send wireless signals through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an e-mail, an SMS service, and the like.

In an optional implementation, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive Solid State Disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk drive, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an electronic device. Certainly, the processor and the storage medium may alternatively exist in the electronic device as discrete components.

The foregoing descriptions about implementations allow a person skilled in the art to understand that, for the purpose of convenience and brevity of description, division of the foregoing functional modules is an example for illustration. In actual application, the foregoing functions can be allocated to different functional modules for implementation based on requirements, in other words, an inner structure of the apparatus is divided into different functional modules to implement all or some of the functions described above.

In an optional implementation, this application provides a communication system. The communication system includes the terminal device and the network device that are provided in embodiments of this application. The terminal device and the network device are configured to implement the method in any possible implementation provided in this application.

In an optional implementation, this application provides a chip system. The chip system includes a processor and a memory, where the memory stores instructions, and when the instructions are executed by a processor, the method according to any possible implementation in this application is implemented. The chip system may include a chip, or may include a chip and another discrete component.

In embodiments provided in this application, it should be understood that the disclosed terminal device, network device, and method may be implemented in other manners. For example, the foregoing apparatus embodiment is merely examples. For example, division of the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented by a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A communication method, wherein the method comprises:

   determining, by a terminal device, a first information set, wherein the first information set comprises M pieces of first information, M is a positive integer, at least one of the M pieces of first information corresponds to at least one piece of downlink data, and the first information indicates whether downlink data corresponding to the first information is successfully parsed; and
   sending, by the terminal device, second information to a network device, wherein the second information is obtained by the terminal device based on downlink data corresponding to N pieces of first information in the first information set, N is a positive integer, and N≤M.

2. The method according to claim 1, wherein the second information comprises one or more of the following: a cause for failure in parsing downlink data, a communication link compensation value, a block error rate, and a result of parsing the downlink data by the terminal device and reliability of the result.

3. The method according to claim 1 or 2, wherein M≥2, and N≥2.

4. The method according to claim 1 or 2, wherein M≥2, and N=1; and the second information is obtained by the terminal device based on downlink data corresponding to a $K^{th}$ piece of first information in the first information set, wherein K is a positive integer, and K≤M.

5. The method according to claim 4, wherein K is determined by the terminal device.

6. The method according to claim 5, wherein the $K^{th}$ piece of first information is first information corresponding to downlink data that complies with a preset scheduling rule, has a preset priority, or meets a preset transmission condition.

7. The method according to claim 5, wherein the $K^{th}$ piece of first information is determined by the terminal device based on time domain resource information.

8. The method according to claim 5, wherein the $K^{th}$ piece of first information is determined by the terminal device based on any one of the following information: a predefined rule, network indication information, upper layer signaling configuration information, a communication protocol, and a preconfigured downlink scheduling period.

9. The method according to any one of claims 4 to 8, wherein the $K^{th}$ piece of first information is a last piece of first information in the first information set.

10. The method according to any one of claims 4 to 8, wherein the $K^{th}$ piece of first information is a first piece of first information in the first information set.

11. The method according to any one of claims 1 to 5, wherein the N pieces of first information are determined by the terminal device based on downlink control information DCI indication information.

12. The method according to claim 11, wherein DCI indication information corresponding to the N pieces of first information indicates to report second information corresponding to the N pieces of first information.

13. The method according to claim 11 or 12, wherein the sending, by the terminal device, second information to a network device comprises:

   sending, by the terminal device to the network device, second information corresponding to an $x^{th}$ piece of first information in the first information set, wherein
   in DCI indication information corresponding to the M pieces of first information, y pieces of DCI indication information indicate to report second information corresponding to corresponding first information, the $x^{th}$ piece of first information is one of y pieces of first information, y is a positive integer, and y≤M.

14. The method according to claim 11 or 12, wherein the sending, by the terminal device, second information to a network device comprises:

sending, by the terminal device, the second information to the network device based on DCI indication information corresponding to an x^th piece of first information in the first information set, wherein
the DCI indication information corresponding to the x^th piece of first information indicates to report second information corresponding to the x^th piece of first information, and $x \in (1, M)$.

15. The method according to claim 13 or 14, wherein x is determined by the terminal device based on one or more of the following: a predefined rule, a protocol rule, or network indication information.

16. The method according to any one of claims 1 to 13, wherein the method further comprises:
sending, by the terminal device, third information to the network device, wherein the third information indicates the N pieces of first information.

17. The method according to any one of claims 1 to 16, wherein the method further comprises:

sending, by the terminal device, the first information set to the network device, wherein
the terminal device sends the first information set and the second information that are jointly coded to the network device.

18. The method according to any one of claims 1 to 16, wherein the method further comprises:

sending, by the terminal device, the first information set to the network device, wherein
the terminal device sends the first information set and the second information that are separately coded to the network device.

19. A communication method, wherein the method comprises:

sending, by a network device, downlink data to a terminal device; and
receiving, by the network device, a first information set and second information from the terminal device, wherein the first information set comprises M pieces of first information, M is a positive integer, at least one of the M pieces of first information corresponds to at least one piece of downlink data, the first information indicates whether downlink data corresponding to the first information is successfully parsed, and the second information is obtained by the terminal device based on downlink data corresponding to N pieces of first information in the first information set, wherein N is a positive integer, and $N \leq M$.

20. The method according to claim 19, wherein the method further comprises:
adjusting, by the network device, a communication link based on the first information set and/or the second information.

21. The method according to claim 19 or 20, wherein the second information comprises one or more of the following: a cause for failure in parsing downlink data, a communication link compensation value, a block error rate, and a result of parsing the downlink data by the terminal device and reliability of the parsing result.

22. The method according to any one of claims 19 to 21, wherein $M \geq 2$, and $N \geq 2$.

23. The method according to any one of claims 19 to 21, wherein $M \geq 2$, and $N = 1$; and the second information is obtained by the terminal device based on downlink data corresponding to a K^th piece of first information in the first information set, wherein K is a positive integer, and $K \leq M$.

24. The method according to any one of claims 19 to 23, wherein before the receiving, by the network device, a first information set and second information from the terminal device, the method further comprises:
sending, by the network device, downlink control information DCI indication information to the terminal device, wherein the DCI indication information is used by the terminal device to determine the second information.

25. The method according to any one of claims 19 to 24, wherein
the first information set and the second information are jointly coded.

26. The method according to any one of claims 19 to 24, wherein
the first information set and the second information are separately coded.

27. A terminal device, wherein the terminal device comprises:

   a memory, configured to store a computer program;
   a transceiver, configured to transmit or receive a radio signal; and
   a processor, configured to execute the computer program, to enable the terminal device to implement the method according to any one of claims 1 to 18.

28. A network device, wherein the network device comprises:

   a memory, configured to store a computer program;
   a transceiver, configured to transmit or receive a radio signal; and
   a processor, configured to execute the computer program, to enable the network device to implement the method according to any one of claims 19 to 26.

29. A communication system, wherein the communication system comprises:

   the terminal device according to claim 27; and
   the network device according to claim 28.

Communication system (10)

Network device (110) ⇄ Terminal device (120)

FIG. 1

Network device

201

Processor

CPU 0

CPU 1

201

Processor

CPU 0

CPU 1

202

203

Memory

204

Communication interface

FIG. 2

Terminal device

FIG. 3

FIG. 4

Network device
(110)

Terminal device
(120)

S501: One or more pieces of downlink data

S502

Determine a first information set, where the
first information set includes M pieces of first
information, M is a positive integer, at least one
of the M pieces of first information
corresponds to at least one piece of received
downlink data, and the first information
indicates whether downlink data corresponding
to the first information is successfully parsed

S503

Obtain second information based on downlink
data corresponding to N pieces of first
information in the first information set, where
N is a positive integer, and N≤M

S504: First information set

S505: Second information

S506

Adjust a communication link based on the
first information set and/or the second
information

S507: Send the downlink data through an
adjusted communication link

FIG. 5

$$\left\lfloor n \cdot \frac{2^{\mu PDSCH}}{2^{\mu PDCCH}} \right\rfloor + K_0$$

| DCI | | | | ... | | PDSCH | |

Slot n

| 0 | 1 | 2 | 3 | 4 | 5 | 6 | 7 | 8 | 9 | 10 | 11 | 12 | 13 |

PDSCH

S=3
L=5

FIG. 6A

| Slot | 0 | 1 | 2 | 3 | 4 | 5 | 6 | 7 | 8 | 9 | 10 | 11 | 12 | 13 | 14 | 15 | 16 | 17 | 18 | 19 |

T   T   T

FIG. 6B

$K_1$

First information set

| PDSCH | | | | ... | | | |

Slot n

FIG. 7A

| 0 | 1 | 2 | | 4 | 5 | 6 | 7 | | 9 |

Semi-persistent codebook

Unscheduled downlink          Scheduled downlink          Scheduled uplink

FIG. 7B

Correspond to
downlink data A

| 1 | 0 | 0 | 0 | 1 |

Correspond to
downlink data B

| 1 | 1 | 1 | 0 | 1 |

Correspond to
downlink data C

| 0 | 0 | 1 | 0 | 1 |

First information set

FIG. 8

Network device
(110)

Terminal device
(120)

S501: One or more pieces of downlink data

S502

Determine a first information set, where the first information set includes M pieces of first information, M is a positive integer, at least one of the M pieces of first information corresponds to at least one piece of received downlink data, and the first information indicates whether downlink data corresponding to the first information is successfully parsed

S503

Obtain second information based on downlink data corresponding to N pieces of first information in the first information set, where N is a positive integer, and N≤M

S504: First information set

S505: Second information

S508: Third information (indicating the N pieces of first information)

S506'

Adjust a communication link based on the first information set and/or the second information, and the third information

S507: Send the downlink data through an adjusted communication link

FIG. 9

Terminal device/
network device

FIG. 10

## INTERNATIONAL SEARCH REPORT

| International application No. |
| --- |
| **PCT/CN2021/071596** |

| | |
| --- | --- |
| **A.** | **CLASSIFICATION OF SUBJECT MATTER** |

H04W 72/04(2009.01)i

According to International Patent Classification (IPC) or to both national classification and IPC

| | |
| --- | --- |
| **B.** | **FIELDS SEARCHED** |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP: 高可靠低时延, 外环链路自适应, 下行数据, 解析, 解码, 成功, 失败, 原因, 补偿值, 误块率, 信噪比, 调整, 调制和编码策略, 反馈, URLLC, OLLA, PDSCH, decode, fail, reason, ACK, NACK, SNR, MCS, BLER, feedback

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CATT. "CSI Feedback Enhancements" *3GPP TSG RAN WG1 #103-e R1-2007850*, 01 November 2020 (2020-11-01), section 2 | 1-29 |
| X | SONY. "Considerations in CSI Feedback Enhancements" *3GPP TSG RAN WG1 #103-e R1-2008356*, 01 November 2020 (2020-11-01), section 2 | 1-29 |
| X | CN 105024781 A (ZTE CORPORATION) 04 November 2015 (2015-11-04) description paragraphs [0098]-[0149] | 1-29 |
| A | CN 108737034 A (HUAWEI TECHNOLOGIES CO., LTD.) 02 November 2018 (2018-11-02) entire document | 1-29 |
| A | CN 109803408 A (HUAWEI TECHNOLOGIES CO., LTD.) 24 May 2019 (2019-05-24) entire document | 1-29 |

☐ Further documents are listed in the continuation of Box C.　　☑ See patent family annex.

| | |
| --- | --- |
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
| --- | --- |
| **06 September 2021** | **29 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/071596**

| Patent document cited in search report | | | Publication date (day/month/year) | Patent family member(s) | | | Publication date (day/month/year) |
|---|---|---|---|---|---|---|---|
| CN | 105024781 | A | 04 November 2015 | EP | 3139529 | A4 | 31 May 2017 |
| | | | | EP | 3139529 | A1 | 08 March 2017 |
| | | | | WO | 2015165166 | A1 | 05 November 2015 |
| | | | | EP | 3734875 | A1 | 04 November 2020 |
| | | | | CN | 110266430 | A | 20 September 2019 |
| | | | | US | 2017141903 | A1 | 18 May 2017 |
| | | | | EP | 3139529 | B1 | 19 February 2020 |
| | | | | US | 10498515 | B2 | 03 December 2019 |
| | | | | US | 2020014520 | A1 | 09 January 2020 |
| | | | | CN | 105024781 | B | 21 June 2019 |
| | | | | US | 11018835 | B2 | 25 May 2021 |
| CN | 108737034 | A | 02 November 2018 | WO | 2018188637 | A1 | 18 October 2018 |
| | | | | EP | 3605909 | A4 | 08 April 2020 |
| | | | | US | 2020044779 | A1 | 06 February 2020 |
| | | | | EP | 3605909 | A1 | 05 February 2020 |
| | | | | VN | 68133 | A | 30 January 2020 |
| CN | 109803408 | A | 24 May 2019 | EP | 3700279 | A4 | 28 October 2020 |
| | | | | WO | 2019095958 | A1 | 23 May 2019 |
| | | | | EP | 3700279 | A1 | 26 August 2020 |
| | | | | US | 2020287670 | A1 | 10 September 2020 |
| | | | | IN | 202037019627 | A | 10 July 2020 |

Form PCT/ISA/210 (patent family annex) (January 2015)